# EUROPEAN PATENT APPLICATION

(11) **EP 3 501 280 A1**
(43) Date of publication of application: **26.06.2019**
(21) Application number: 17208547.4
(22) Date of filing: 19.12.2017
(51) Int. Cl.: A01N 25/02, A01N 25/30, A01N 57/12, A01N 47/24, A01N 43/653, A01N 43/56, A01N 43/84

(54) **COMPOSITION COMPRISING AN AGROCHEMICALLY ACTIVE COMPOUND AND A CARBONATE**

(71) Applicant: BASF SE, 67056 Ludwigshafen am Rhein (DE)
(72) Inventor: The designation of the inventor has not yet been filed
(74) Representative: BASF IP Association

(57) **Abstract**

A liquid composition comprising at least
component (a): at least one agrochemically active compound, and
component (b): at least one carbonate of the formula (I) 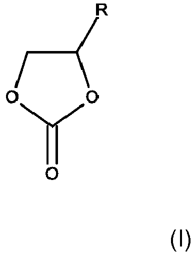 wherein, R is selected from
(vii) linear, cyclic or branched C₃-C₁₀ alkyl,
(viii) phenyl,
(ix) -CH₂OR¹, wherein R¹ is selected from linear or branched C₁-C₆ alkyl, linear or branched C₁-C₆ alkyl-carbonyl, phenyl-carbonyl, benzyl-carbonyl, lactate, pyridine-carbonyl, and a residue according to the following formula (II) 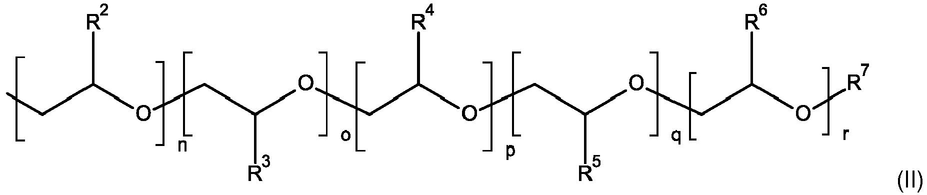 wherein the variables in formula (II) are as follows:
R², R³, R⁴, R⁵, and R⁶ are independently from each other selected from H, methyl, ethyl, propyl and phenyl;
R⁷ is selected from H, linear, cyclic or branched C₁-C₁₀ alkyl, and phenyl;
n, o, p, q, and r are independently from each other an integer in the range of 0-6, wherein the sum of the integers is in the range of 1 to 6;
and
optionally component (c): at least one compound selected from the group of organic solvents.

## Description

The present invention relates to a composition comprising an agrochemically active compound and a carbonate of the formula (I) as described herein below. The invention furthermore relates to a process for the preparation of the composition by bringing the agrochemically active compound and the carbonate into contact; the use of the carbonate of the formula (I) as a solvent for agrochemically active compounds and or as adjuvant in agrochemical formulations; methods for controlling phytopathogenic fungi and/or undesired vegetation and/or undesired insect or mite attack and/or for regulating the growth of plants, wherein the composition is allowed to act on the respective pests, their environment or on the plants to be protected from the respective pest, on the soil and/or on undesired plants and/or on the crop plants and/or on their environment; and to seed comprising the composition. Combinations of preferred features with other preferred features are comprised by the present invention.

Many agrochemically active compounds are not sufficiently soluble in water or organic solvents. Often such agrochemically active compounds are therefore formulated as solid-based formulations or compositions (such as dispersions). Liquid agrochemical compositions (such as emulsions) may often not be realized due to the fact, that only organic solvents sufficiently dissolve agrochemically active compounds which, however, negatively impact the environment, animal and/or human health.

The object of the invention at hand was to find compounds, that dissolve agrochemically active compounds sufficiently and which therefore allow to provide liquid agrochemical compositions. The object was achieved by providing a liquid composition comprising at least
component (a): at least one agrochemically active compound, and
component (b): at least one carbonate of the formula (I) 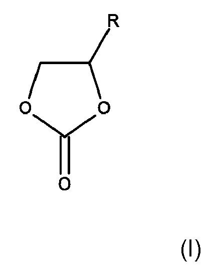 wherein, R is selected from
   (i)linear, cyclic or branched C₃-C₁₀ alkyl,
   (ii) phenyl,
   (iii) -CH₂OR¹, wherein R¹ is selected from linear or branched C₁-C₆ alkyl, linear or branched C₁-C₆ alkyl-carbonyl, phenyl-carbonyl, benzyl-carbonyl, lactate, pyridine-carbonyl, and a residue according to the following formula (II) 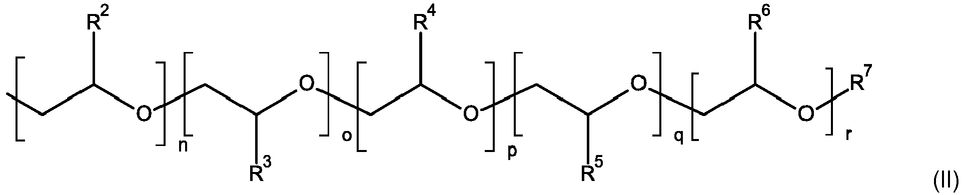 wherein the variables in formula (II) are as follows:
      R², R³, R⁴, R⁵, and R⁶ are independently from each other selected from H, methyl, ethyl, propyl and phenyl;
      R⁷ is selected from H, linear, cyclic or branched C₁-C₁₀ alkyl, and phenyl;
      n, o, p, q, and r are independently from each other an integer in the range of 0-6, wherein the sum of the integers is in the range of 1 to 6.

In one embodiment, the invention provides a liquid composition according to the invention, wherein component (b) has a boiling point of ≥ 170°C at 101.3 kPa.

The invention provides a process for the preparation of a liquid composition of the invention, wherein at least component (a), component (b), and optionally component (c) are mixed in no specified order in one or more steps.

The invention provides an emulsion comprising the liquid composition of the invention as discontinuous phase and water as continuous phase.

The invention provides a process for the preparation of an emulsion comprising the mixing in no specified order in one or more steps at least component (a), component (b), optionally component (c), and water.

The invention also provides an agrochemical formulation comprising components (a), (b) and optionally (c) and one or more formulation auxiliaries.

The invention also provides an agrochemical formulation comprising at least the liquid composition of the invention and one or more formulation auxiliaries.

The agrochemical formulation may comprise solid particles which are not soluble in the agrochemical formulation.

The invention provides a process for the preparation of an agrochemical formulation comprising the mixing in no specified order in one or more steps at least component (a), component (b), optionally component (c), and at least one formulation auxiliary.

The invention provides a tank-mix comprising the liquid composition and/or agrochemical formulation according to the invention, wherein the liquid composition and/or agrochemical formulation is diluted with water.

The invention provides a process for preparation of a tank-mix comprising the mixing in no specified order in one or more steps of at least component (a), component (b), optionally component (c), at least one formulation auxiliary and water.

The invention relates to the use of the liquid composition and/or agrochemical formulation of the invention to control phytopathogenic fungi and/or undesired plant growth and/or undesired insect or mite attack and/or for regulating the growth of plants. In one embodiment, pests and/or their environment and/or the plants to be protected from the respective pest and/or the soil and/or undesired plants are treated with the liquid composition and/or the agrochemical formulation of the invention. In one embodiment, plant propagation material is treated with the liquid composition and/or agrochemical formulation of the invention.

The invention relates to the use or method of use of liquid compositions and/or agrochemical formulations of the invention to the improve of health of crop plants.

The present invention provides the use or method of use of at least one carbonate according to formula (I) for dissolving at least one agrochemically active compound.

The invention provides the use or method of use of at least one carbonate according to formula (I) of the invention to increase solubility of an agrochemically active compound. The invention provides the use or method of use of at least one carbonate according to formula (I) of the invention to increase solubility of a mixture of two or more agrochemically active compounds. The invention provides the use or method of use of at least one carbonate according to formula (I) of the invention to reduce the amount of component (c) necessary for dissolving a certain amount of component (a) to form a homogenous solution when compared to the minimum amount necessary to dissolve component (a) in component (c) only.

In one embodiment, the invention relates to the use or method of use of a carbonate according to formula (I) of the invention to reduce the amount of component (c) for improvement of environmental compatibility of an agrochemical formulation.

In one embodiment, the invention relates to the use or method of use of a carbonate according to formula (I) of the invention to reduce component (c) for improvement of effectiveness of an agrochemical formulation.

The present invention provides to the use or method of use of a carbonate according to formula (I) of the invention as an adjuvant.

The present invention provides to the use or method of use of a carbonate according to formula (I) of the invention to enhance the efficacy of adjuvants.

The invention relates to the use or method of use of a carbonate according to formula (I) to increase effectiveness of an agrochemical formulation.

The invention relates to the use or method of use of a carbonate according to formula (I) to reduce the amount of adjuvant comprised in an agrochemical formulation, wherein the effectiveness of the agrochemical formulation is at least maintained when compared to the effectiveness of an agrochemical formulation comprising the adjuvant but lacking a carbonate according to formula (I).

### Detailed description:

### Liquid composition

The invention relates to a liquid composition comprising at least
component (a): at least one agrochemically active compound, and
component (b): at least one carbonate of the formula (I) 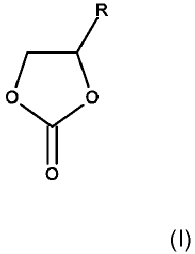 wherein, R is selected from
   (i)linear, cyclic or branched C₃-C₁₀ alkyl,
   (ii) phenyl,
   (iii) -CH₂OR¹, wherein R¹ is selected from linear or branched C₁-C₆ alkyl, linear or branched C₁-C₆ alkyl-carbonyl, phenyl-carbonyl, benzyl-carbonyl, lactate, pyridine-carbonyl, and a residue according to the following formula (II) 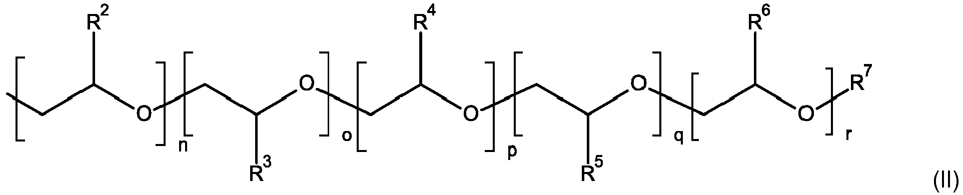 wherein the variables in formula (II) are as follows:
      R², R³, R⁴, R⁵, and R⁶ are independently from each other selected from H, methyl, ethyl, propyl and phenyl;
      R⁷ is selected from H, linear, cyclic or branched C₁-C₁₀ alkyl, and phenyl;
      n, o, p, q, and r are independently from each other an integer in the range of 0-6, wherein the sum of the integers is in the range of 1 to 6.

The composition of the invention is liquid at 20°C and 101.3 kPa. "Liquid" in this context includes any pourable liquids. Therefore, liquid compositions may be gel-type compositions. Gel-type compositions may comprise at least one rheology modifier. In one embodiment, liquid compositions are paste-like compositions, wherein liquid component (b) moistens solid component (a) to form a paste. Paste-like compositions typically appears a sticky liquid. Said paste-like compositions usually comprise dissolved and/or soaked portions of solid substance.

### Component (a):

The liquid composition of the invention is a composition which comprises at least one agrochemically active compound, i.e. component (a).

The agrochemically active compound comprised in component (a) may be selected from "pesticides" and "fertilizers".

"Pesticides" may be selected from synthetic pesticides and biopesticides. The skilled worker is familiar with pesticides, which can be found, for example, in the Pesticide Manual, 17th Ed. (2015), The British Crop Protection Council, London. Non-limiting examples of pesticides include, but are not limited to fungicides, insecticides, nematicides, herbicides (algicides, arboricides, graminicides), akaricides, molluskicides, ovicides, rodenticides, safeners and growth regulators.

In one embodiment, component (a) comprises at least one fungicide and/or at least one insecticide and/or at least one nematicide and/or at least one herbicide and/or at least one akaricide and/or at least one molluskicide and/or at least one ovicide and/or at least one rodenticide and/or at least one safener and/or at least one growth regulator.

Non-limiting examples of suitable insecticides include compounds from the class of the carbamates, organophosphates, organochlorine insecticides, phenylpyrazoles, pyrethroids, neonicotinoids, spinosins, avermectins, milbemycins, juvenile hormone analogs, alkyl halides, organotin compounds, nereistoxin analogs, benzoylureas, diacylhydrazines, METI acaricides, and insecticides such as chloropicrin, pymetrozine, flonicamid, clofentezine, hexythiazox, etoxazole, diafenthiuron, propargite, tetradifon, chlorfenapyr, DNOC, buprofezin, cyromazine, amitraz, hydramethylnon, acequinocyl, fluacrypyrim, rotenon, or their derivatives.

In one embodiment, insecticides are selected from the group of organo-phosphates and neonicotinoids. In one embodiment, the insecticide is dimethoate.

Non-limiting examples of suitable fungicides include compounds from the classes dinitroanilines, allylamines, anilinopyrimidines, antibiotics, aromatic hydrocarbons, benzenesulfonamides, benzimidazoles, benzoisothiazoles, benzophenones, benzothiadiazoles, benzotriazines, benzylcarbamates, carbamates, carboxamides, carboxylic acid amides, chloronitriles, cyanoacetamide oximes, cyanoimidazoles, cyclopropanecarboxamides, dicarboximides, dihydrodioxazines, dinitrophenyl crotonates, dithiocarbamates, dithiolanes, ethylphosphonates, ethylaminothiazolecarboxamides, guanidines, hydroxy(2-amino)pyrimidines, hydroxyanilides, imidazoles, imidazolinones, inorganic substances, isobenzofuranones, methoxyacrylates, methoxycarbamates, morpholines, N-phenylcarbamates, oxazolidinediones, oximinoacetates, oximinoacetamides, peptidylpyrimidine nucleosides, phenylacetamides, phenylamides, phenylpyrroles, phenylureas, phosphonates, phosphorothiolates, phthalamic acids, phthalimides, piperazines, piperidines, propionamides, pyridazinones, pyridines, pyridinylmethylbenzamides, pyrimidinamines, pyrimidines, pyrimidinonehydrazones, pyrroloquinolinones, quinazolinones, quinolines, quinones, sulfamides, sulfamoyltriazoles, thiazolecarboxamides, thiocarbamates, thiophanate, thiophenecarboxamides, toluamides, triphenyltin compounds, triazines, triazoles.

In one embodiment, fungicides are selected from the group of methoxyacrylates, morpholines, triazoles, and carboxamides. In one embodiment, fungicides may be selected from azoxystrobin, pyraclostrobin, fenpropiomorph, epoxiconacole, mefentrifluconazole, tebuconazole, diphenoconazole, and fluxapyroxad.

Non-limiting examples of suitable herbicides include compounds from the classes of acetamides, amides, aryloxyphenoxypropionates, benzamides, benzofuran, benzoic acids, benzothiadiazinones, bipyridylium, carbamates, chloroacetamides, chlorocarboxylic acids, cyclohexanediones, dinitroanilines, dinitrophenol, diphenyl ethers, glycines, imidazolinones, isoxazoles, isoxazolidinones, nitriles, N-phenylphthalimides, oxadiazoles, oxazolidinediones, oxyacetamides, phenoxycarboxylic acids, phenylcarbamates, phenylpyrazoles, phenylpyrazolines, phenylpyridazines, phosphinic acids, phosphoroamidates, phosphorodithioates, phthalamates, pyrazoles, pyridazinones, pyridines, pyridinecarboxylic acids, pyridinecarboxamides, pyrimidinediones, pyrimidinyl(thio)benzoates, quinolinecarboxylic acids, semicarbazones, sulfonylaminocarbonyltriazolinones, sulfonylureas, tetrazolinones, thiadiazoles, thiocarbamates, triazines, triazinones, triazoles, triazolinones, triazolocarboxamides, triazolopyrimidines, triketones, uracils, ureas.

In one embodiment, herbicides are selected from the group of benzoic acids, sulfonyl ureas, and diphenyl ethers. Herbicides may be selected from dicamba, rimsulfuron, and oxyfluorofen. Non-limiting examples of suitable growth regulators include abscisic acid, amidochlor, ancymidol, 6-benzylaminopurine, brassinolide, butralin, chlormequat (chlormequat chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid, maleic hydrazide, mefluidide, mepiquat (mepiquat chloride), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid, triexapac-ethyl, and uniconazole.

"Safener" usually means compounds which are added to reduce or to avoid phytotoxic effects towards specific plants.

Fertilizer includes organic and synthetic fertilizers that may be applied to soils or plant tissue such as leaves to supply plant nutrients which usually enhance growth of plants. Fertilizers typically provide in varying proportions nitrogen and/or phosphorus and/or potassium and/or calcium and/or magnesium and/or sulfur and/or copper and/or iron and/or manganese and/or molybdenum and/or zinc and/or boron and/or other nutrients.

Component (a) may comprise at least one water-insoluble agrochemically active compound. Water-insoluble in this context means that ≤ 50 g of the respective agrochemically active compound is soluble in 1000 g water at 20°C and 101.3 kPa. Water-insoluble may mean that ≤ 30 g, ≤ 25 g, ≤ 20 g, ≤ 15 g, ≤ 10 g, ≤ 9 g, ≤ 8 g, ≤ 7 g, ≤ 6 g, ≤ 5 g, ≤ 2.5 g, ≤ 1 g, ≤ 0.5 g, ≤ 0.1 g, ≤ 0.05 g, ≤ 0.025 g, ≤ 0.01 g, or ≤ 0,005 g of the respective agrochemically active compound is soluble in 1000 g water at 20°C and 101.3 kPa without phase separation.

In one embodiment, component (a) comprises at least one water-insoluble fungicide and/or at least one water-insoluble insecticide and/or at least one water-insoluble nematicide and/or at least one water-insoluble herbicide and/or at least one water-insoluble akaricide and/or at least one water-insoluble molluskicide and/or at least one water-insoluble ovicide and/or at least one water-insoluble rodenticide and/or at least one water-insoluble safener and/or at least one water-insoluble growth regulator.

In one embodiment, component (a) comprises at least one water-insoluble agrochemically active compound and at least one water-soluble agrochemically active compound. At least one water-soluble agrochemically active compound may be selected from at least one water-soluble pesticide, at least one water-soluble fertilizer, and combinations thereof.

### Component (b):

The liquid composition of the invention is a composition which comprises at least one carbonate of the formula (I) [i.e. component (b)] 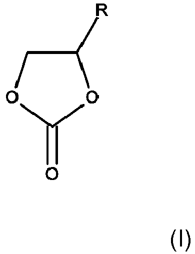 wherein, R is selected from
(i)linear, cyclic or branched C₃-C₁₀ alkyl,
(ii) phenyl,
(iii) -CH₂OR¹, wherein R¹ is selected from linear or branched C₁-C₆ alkyl, linear or branched C₁-C₆ alkyl-carbonyl, phenyl-carbonyl, benzyl-carbonyl, lactate, pyridine-carbonyl, and a residue according to the following formula (II) 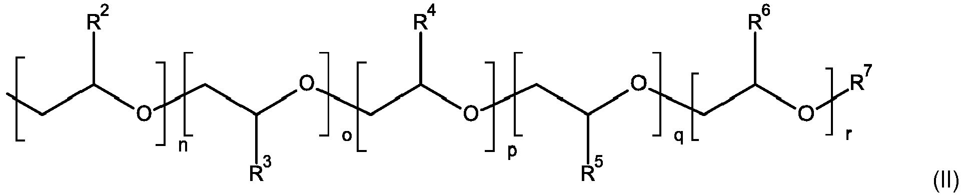 wherein the variables in formula (II) are as follows:
   R², R³, R⁴, R⁵, and R⁶ are independently from each other selected from H, methyl, ethyl, propyl and phenyl;
   R⁷ is selected from H, linear, cyclic or branched C₁-C₁₀ alkyl, and phenyl;
   n, o, p, q, and r are independently from each other an integer in the range of 0-6, wherein the sum of the integers is in the range of 1 to 6.

In one embodiment, R is selected from linear or branched C₃-C₁₀ alkyl.

In one embodiment, R is selected from -CH₂OR¹, wherein R¹ is selected H, linear or branched C₁-C₃ alkyl-carbonyl and phenyl-carbonyl.

R may be selected from -CH₂OR¹, wherein R¹ is a residue according to the formula (II), wherein n+o+p may be 0, R⁵ may be methyl and q may be 0-2, R⁶ may be H and r may be 0-3, R⁷ may be C₁-C₄ alkyl or phenyl.

In one embodiment, component (b) comprises more than one carbonate according to formula (I).

In one embodiment, component (b) is liquid at 23°C and 101.3 kPa. "Liquid" in the context of component (b) includes compounds having a dynamic viscosity in the range of about 1 to 10,000 mPa*s at 23°C and 101.3 kPa. The dynamic viscosity of component (b) may be in the range of about 1 to 7,000 mPa*s, in the range of about 1 to 1,500 mPa*s, in the range of about 1 to 1,000 mPa*s, in the range of about 1 to 800 mPa*s, in the range of about 1 to 600 mPa*s, in the range of about 1 to 500 mPa*s, in the range of about 1 to 250 mPa*s, in the range of about 1 to 300 mPa*s, or in the range of about 1 to 150 mPa*s, in the range of about 1 to 100 mPa*s, in the range of about 1 to 80 mPa*s, in the range of about 1 to 60 mPa*s, in the range of about 1 to 50 mPa*s, or in the range of about 1 to 40 mPa*s, all at 23°C and 101.3 kPa. The dynamic viscosity may be determined by using the Stabinger measurement method as this is implemented e.g. by the Anton Paar viscosimeter.

In one embodiment, component (b) itself is not liquid at 23°C and 101,3 kPa. In such a case, component (b) may be dissolved in component (c) as disclosed below and the mixture of component (b) and (c) is liquid at 23°C and 101,3 kPa. Said liquid mixture may have a dynamic viscosity in the range of about 1 to 10,000 mPa*s at 23°C and 101.3 kPa. The dynamic viscosity of component (b) may be in the range of about 1 to 7,000 mPa*s, in the range of about 1 to 1,500 mPa*s, in the range of about 1 to 1,000 mPa*s, in the range of about 1 to 800 mPa*s, in the range of about 1 to 600 mPa*s, in the range of about 1 to 500 mPa*s, in the range of about 1 to 250 mPa*s, in the range of about 1 to 300 mPa*s, or in the range of about 1 to 150 mPa*s, in the range of about 1 to 100 mPa*s, in the range of about 1 to 80 mPa*s, in the range of about 1 to 60 mPa*s, in the range of about 1 to 50 mPa*s, or in the range of about 1 to 40 mPa*s, all at 23°C and 101.3 kPa.

In one embodiment, component (b) has a boiling point of above 170°C at 101.3 kPa. Component (b) may have boiling points above 180°C, above 200°C, above 220°C, above 240°C, above 260°C, above 280°C, above 290°C, above 300°C, above 310°C, above 320°C, above 330°C, above 340°C, or above 350°C at 101.3 kPa. The boiling point may be measured at pressures below 101.3 kPa e.g. to avoid degradation of component (b). As usually the vapor pressure of most liquids has a predictable temperature-dependence, it is possible from one boiling point measured at a certain pressure to calculate the boiling point at 101.3 kPa. E.g. one tool useful for calculation from boiling points measured at lower pressure than 101.3 kPa to boiling points at 101.3 kPa is http://www.calctool.org/CALC/chem/substance/boiling.

In one embodiment, component (b) has a freezing temperature of < -5°C at 101.3 kPa.

In one embodiment, component (b) is water-immiscible, meaning that ≤ 100 g of water are miscible in 1000 g of component (b) at 20°C and 101.3 kPa without phase separation.

Component (b) may be water-immiscible when ≤ 50 g, ≤ 10 g, ≤ 5 g, or ≤ 1 g of water are miscible with 1000 g of component (b) at 20°C and 101.3 kPa without phase separation.

In one embodiment, a solution and/or mixture of 5 g component (b) in 1000 g water has a dynamic surface tension of > 45 mN/m at 20°C and 101.3 kPa. A solution or mixture of 5 g component (b) in 1000 g water may have a dynamic surface tension of ≥ 50 mN/m at 20°C and 101.3 kPa. It is appreciated that due to component (b) being water-immiscible, 5 g component (b) in 1000 g water usually will form a mixture, rather than a solution.

The surface tension may be measured according to the knowledge of a skilled person. The dynamic surface tension may be measured with a bubble pressure tensiometer, wherein the maximum internal pressure of a gas bubble which is formed in a liquid by means of a capillary is measured; the measured value usually corresponds to the surface tension at a certain surface age, the time from the start of the bubble formation to the occurrence of the pressure maximum. In one embodiment, the surface age during measuring the dynamic surface tension at 20°C and 101.3 kPa with a bubble pressure tensiometer is 50 ms.

Component (b), in one embodiment, is selected from those compounds according to formula (I) which have "low toxicity". "Low toxicity" means lacking labelling towards "hazardous to the environment", and/or labelling towards "acute toxicity" and/or "serious health hazard". In one embodiment, "low toxicity" means lacking phytotoxicity. In one embodiment, "low toxicity" means lacking labelling towards "health hazard", and/or labelling towards "hazardous to the ozone layer". Low toxicity may include "no toxicity" which manifests itself in lacking hazard labelling.

In one embodiment, "low toxicity" means, that component (b) exerts no detectable or significant phytotoxicity. Phytotoxicity may be measured by methods known to those skilled in the art testing monocotyles, such as *Sorghum saccharatum* and/or dicotyls such as *Lepidium sativum* and *Sinapis alba.* For example, germination of the seeds and/or root growth and/or shoot growth can be determined when exposed to component (b), in comparison to a control such as water. In one embodiment, "low toxicity" means, that component (b) exerts no detectable or significant phytotoxicity towards the crop plant to be treated with a composition comprising component (b).

In one embodiment, at least one carbonate according to formula (I) as disclosed above comprised in component (b) has a boiling point as disclosed above and/or a freezing temperature as disclosed above and/or is water-immiscible as disclosed above and/or has low toxicity as disclosed above.

At least one carbonate comprised in component (b) is selected from the compounds according to table 1:

**Table 1 - carbonates**

| **carbonate No** | **IUPAC name** | **Formula (I)** |
|---|---|---|
| 1 | (2-oxo-1,3-dioxolan-4-yl)methyl propanoate | R = -CH₂OR¹; R¹ = C₃ alkylcarbonyl |
| 2 | 4-propyl-1,3-dioxolan-2-one | R = C₃ alkyl |
| 3 | (2-oxo-1,3-dioxolan-4-yl)methyl acetate | R = -CH₂OR¹; R¹ = C₁ alkylcarbonyl |
| 4 | 4-Hydroxymethyl-2-oxo-1,3-dioxolane | R = -CH₂OR¹; R¹ = H |
| 5 | (2-oxo-1,3-dioxolan-4-yl)methyl benzoate | R = -CH₂OR¹; R¹ = phenylcarbonyl |
| 6 | 4-(2-phenoxyethoxymethyl)-1,3-dioxolan-2-one | R = -CH₂OR¹; R¹ = residue according to formula (II), wherein n, o, p, and q are 0, R⁶ = H, r = 1, R₇ = phenyl |
| 7 | 4-[[2-[2-[2-[2-(2-butoxyethoxy)ethoxy]ethoxy]-1-methyl-ethoxy]-1-methyl-ethoxy]methyl]-1,3-dioxolan-2-one | R = -CH₂OR¹; R¹ = residue according to formula (II), wherein n, o, and p are 0, R⁵ = methyl, q = 2), R⁶ = H, r = 3, R⁷ = C₄ alkyl |

In one embodiment, component (b) comprises at least two of the compounds according to table 1. Component (b) may comprise more than two of the compounds according to table 1.

At least one agrochemically active compound comprised in component (a) is soluble at 20°C and 101.3 kPa in component (b) until its saturation point is achieved in component (b). The saturation point of at least one agrochemically active compound comprised in component (a) means the concentration where component (b) cannot dissolve any more of said agrochemically active compound at 20°C and 101.3 kPa and component (a) stays dissolved in component (b) for at least 24h at 20°C and 101.3 kPa. Adding more than this maximum concentration of said agrochemically active compound at 20°C and 101.3 kPa will result in phase separation (precipitation).

In one embodiment, at least 10 g of at least one agrochemically active compound comprised in component (a) is soluble in 1000 g of component (b) at 20°C and 101.3 kPa without phase separation until the saturation point of component (a) in component (b) is achieved. At least 15 g, at least 20 g, at least 25 g, at least 30 g, at least 45 g, at least 50 g, at least 100 g, at least 150 g, or at least 200 g of at least one agrochemically active compound comprised in component (a) may be soluble at 20°C and 101.3 kPa in 1000 g of component (b) without phase separation until the saturation point of component (a) in component (b) is achieved.

In one embodiment, at least 8 g of azoxystrobin comprised in component (a) is soluble in 1000 g of component (b) at 20°C and 101.3 kPa without phase separation until the saturation point of azoxystrobin in component (b) is achieved. In one embodiment, at least 14 g of azoxystrobin comprised in component (a) is soluble in 1000 g of component (b) at 20°C and 101.3 kPa without phase separation until the saturation point of azoxystrobin in component (b) is achieved.

In one embodiment, at least 4 g of epoxiconazole comprised in component (a) is soluble in 1000 g of component (b) at 20°C and 101.3 kPa without phase separation until the saturation point of epoxiconazole in component (b) is achieved.

At least 1 g or at least 7 g of mefentrifluconazole comprised in component (a) may be soluble in 1000 g of component (b) at 20°C and 101.3 kPa without phase separation until the saturation point of mefentrifluconazole in component (b) is achieved.

### Component (c) - other solvent:

The composition of the invention may comprise at least one additional component (c). Component (c) may comprise at least one compound selected from the group of organic solvents, such as mineral oil fractions of medium to high boiling point such as kerosene and diesel oil, furthermore coal tar oils and oils of vegetable or animal origin, aliphatic, alicyclic and aromatic hydrocarbons, for example paraffins, tetrahydronaphthalene, alkylated naphthalenes and their derivatives, alkylated benzenes and their derivatives, alcohols such as ethanol, propanol, butanol, benzyl alcohol and cyclohexanol, glycols, ketones such as cyclohexanone, gamma-butyrolactone, dimethyl fatty acid amides, fatty acids and fatty acid esters, and strongly polar solvents, for example amines such as N-methylpyrrolidone.

In one embodiment component (c) comprises at least one compound selected from the group of polar aprotic solvents such as sulfoxides, amides, hydrocarbyl- or hydrocarbylene carbonates. An example of a suitable sulfoxide is but is not limited to dimethyl sulfoxide. Suitable hydrocarbyl carbonates include but are not limited to dialkyl-carbonates such as those with C₁-C₈ alkyl chains. Suitable hydrocarbylene carbonates include but are not limited to alkylene carbonates such as C₂-C₄ alkylene-carbonates (ethylene carbonate; 1,2-propylene carbonate; 1,3-propylene carbonate; 1,2-butylene carbonate; 1,3-butylene carbonate; 2,3-butylene carbonate.

In one embodiment, at least one solvent comprised in component (c) is selected from alkoxylates of the formula (III) 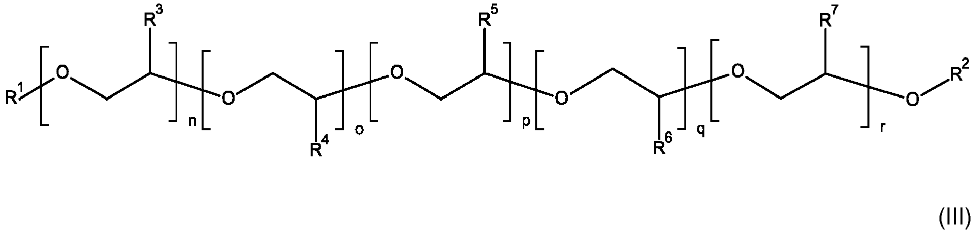 wherein the variables in formula (III) are defined as follows:
R¹ and R² are independently selected from H, linear or branched C₁-C₈ alkyl, linear or branched C₁₀ alkyl, phenyl, C₁-C₄ alkylcarbonyl, phenylcarbonyl, C₁-C₄ alkylphenylcarbonyl, and pyridylcarbonyl, wherein R¹ and R² are not H at the same time
R³, R⁴, R⁵, R⁶ and R⁷ are independently selected from H, linear or branched C₁-C₁₀ alkyl, and phenyl and
wherein n, o, p, q and r are each independently in the range of 0-8 referring to average values, wherein n+o+p+q+r is at least 1. n+o+p+q+r may be in the range of 1-6.

The alkoxylate according to the general formula (III) may be of any structure, is it block or random structure, and is not limited to the displayed sequence of formula (III).

In one embodiment, the alkoxylate according to formula (III) is characterized in R¹ and R² being independently selected from H, linear or branched C₁-C₈ alkyl, linear or branched C₁₀ alkyl, phenyl, C₁-C₄ alkylcarbonyl, phenylcarbonyl, C₁-C₄ alkylphenyl carbonyl, and 3-pyridylcarbonyl, wherein R¹ and R² are not H at the same time.

R¹ and/or R² in formula (III) may be linear or branched C₁-C₈ alkyl, or linear or branched C₁-C₆ alkyl.

R¹ and/or R² in formula (III) may be linear or branched C₁₀ alkyl.

R¹ and/or R² in formula (III) may be phenyl.

R¹ and/or R² in formula (III) may be C₁-C₄ alkylcarbonyl, or C₁-C₂ alkylcarbonyl.

R¹ and/or R² in formula (III) may be phenylcarbonyl.

R¹ and/or R² in formula (III) may be C₁-C₄ alkylphenyl carbonyl.

R¹ and/or R² in formula (III) may be 3-pyridylcarbonyl.

Whenever in formula (III) R¹ is different from R², R¹ may be combined with any R² as described above.

In one embodiment, in formula (III) R¹ is C₁-C₆ alkyl and R² is selected from H, C₁-C₂ alkylcarbonyl, and phenyl.

In one embodiment, in formula (III) R¹ is C₁-C₂ alkylcarbonyl and R² is selected from H, and methyl.

In one embodiment, in formula (III) R¹ is phenyl and R² is C₁-C₂ alkylcarbonyl.

In one embodiment, in formula (III) R¹ is 3-pyridylcarbonyl and R² is C₁-C₂ alkyl.

In one embodiment, in formula (III) R¹ and R² are both not H.

In one embodiment, R³, R⁴, and R⁵ in formula (III) are independently selected from H, linear or branched C₁-C₃ alkyl, linear or branched C₈ alkyl, and phenyl, wherein n, o and p are each independently in the range of 0-5 referring to average values, wherein n+o+p is at least 1, and q and r are 0.

In one embodiment, R³ in formula (III) is selected from H, linear C₁-C₃ alkyl, linear C₈ alkyl, and phenyl, wherein n is in the range of 1-5 referring to an average value.

In one embodiment, R⁴ in formula (III) is selected from H, and CH₃, wherein o is in the range of 1-3 referring to an average value.

In one embodiment, R⁵ in formula (III) is H and p=1, the latter referring to an average value.

In one embodiment, component (c) is miscible with component (b) at 20°C and 101.3 kPa. "Miscible" in this context means, that that no visible phase separation takes place between the mixed components (b) and (c).

In one embodiment, at least one agrochemically active compound comprised in component (a) is soluble in the mixture of components (b) and (c) at 20°C and 101.3 kPa until its saturation point in the mixture of components (b) and (c) is achieved. In one embodiment, all agrochemically active compound comprised in component (a) are soluble in the mixture of components (b) and (c) at 20°C and 101.3 kPa, until their individual saturation points in the mixture of components (b) and (c) are achieved.

In one embodiment, at least 10 g of at least one agrochemically active compound comprised in component (a) is soluble in 1000 g of a mixture of components (b) and (c) at 20°C and 101.3 kPa without phase separation until the saturation point of component (a) in the mixture of components (b) and (c) is achieved. At least 15 g, at least 20 g, at least 25 g, at least 30 g, at least 45 g, at least 50 g, at least 100 g, at least 150 g, or at least 200 g of at least one agrochemically active compound comprised in component (a) may be soluble at 20°C and 101.3 kPa in 1000 g of a mixture of components (b) and (c) without phase separation until the saturation point of component (a) in a mixture of components (b) and (c) is achieved.

### Components (a), (b) and (c) in a liquid composition:

The liquid composition of the invention comprises component (a); wherein each agrochemically active compound comprised in component (a) is comprised in amounts useful for the final application of the liquid composition.

In one embodiment, the liquid composition of the invention comprises at least

component (a): at least one agrochemically active compound in amounts in the range of 0.01% to 70% by weight, relative to the total weight of the composition,

component (b): at least one carbonate according to formula (I) in amounts of at least 10% by weight, relative to the total weight of the composition, and

optionally component (c) in amounts ≤ 65% by weight, relative to the total weight of the composition.

The liquid composition may comprise component (a) in amounts in the range of 0.1 % to 70% by weight in the range of 0.1% to 50% by weight, in the range of 1 % to 30% by weight or in the range of 2% to 20% by weight, all relative to the total weight of the composition.

The liquid composition may comprise component (b) in amounts of ≤ 98% by weight, ≤ 95% by weight, ≤ 90% by weight, ≤ 85% by weight, ≤ 80% by weight, ≤ 70% by weight, ≤ 60% by weight, or ≤ 50% by weight, ≤ 40% by weight, or ≤ 30% by weight, all relative to the total weight of the composition.

The liquid composition of the invention may comprise component (c) in amounts ≤ 60%, ≤ 50%, ≤ 40%, ≤ 30%, ≤ 20%, ≤ 10% or ≤ 5%, all relative to the total weight of the composition.

In one embodiment, the liquid composition according to the invention is emulsifiable. Emulsifiable in the context of this invention means that the liquid composition of the invention is water-immiscible.

The invention relates to an emulsion comprising the liquid composition of the invention as dispersed phase and water as dispersion medium.

### Agrochemical formulation

The invention provides an agrochemical formulation comprising component (a) as described above, component (b) as described above, optionally component (c) as described above, and one or more formulation auxiliaries,
wherein component (a) may or may not be fully dissolved in component (b) and
wherein the number and types of formulation auxiliaries used depend on the formulation type desired.

The invention provides an agrochemical formulation comprising the liquid composition of the invention and one or more formulation auxiliaries, wherein the number and types of formulation auxiliaries used depend on the formulation type desired. The specifics for the liquid composition of the invention are those as disclosed above.

In one embodiment, the agrochemical formulation of the invention is liquid. The liquid agrochemical formulation may be an emulsifiable concentrates (EC) or emulsions (EW, EO, ES, ME) or soluble liquids (SL).

The invention provides a solid-based agrochemical formulation comprising component (a) as described above, component (b) as described above, optionally component (c) as described above, and one or more formulation auxiliaries,
wherein at least one agrochemically active compound comprised in component (a) may or may not be fully dissolved in component (b) and
wherein the number and types of formulation auxiliaries used depend on the formulation type desired.

In one embodiment, the solid-based agrochemical formulation of the invention comprises component (a) as described above, component (b) as described above, optionally component (c) as described above, and one or more formulation auxiliaries, wherein at least one agrochemically active compound comprised in component (a) is dissolved in component (b). In one embodiment, the solid-based agrochemical formulation of the invention comprises the liquid composition of the invention as described above and one or more formulation auxiliaries.

In one embodiment, the solid-based formulation of the invention comprises component (a) as described above, component (b) as described above, optionally component (c) as described above, and one or more formulation auxiliaries, wherein at least one agrochemically active compound comprised in component (a) is insoluble in the agrochemical formulation.

At least one agrochemically active compound comprised in component (a) is not dissolved in component (b) when said agrochemically active compound is insoluble in component (b), meaning that said agrochemically active compound remains solid in component (b) at 20°C and 101.3 kPa.

At least one agrochemically active compound comprised in component (a) is insoluble in the agrochemical formulation when at least one agrochemical active compound remains solid in the agrochemical formulation at 20°C and 101.3 kPa.

A solid agrochemically active compound herein includes any kind of particles of a size which are dispersible. At least one solid agrochemically active compound means at least one type of solid agrochemically active compound.

At least one solid agrochemically active compound is solid at 20°C and 101.3 kPa. In one embodiment, said solid agrochemically active compound is solid at 101.3 kPa and at a temperature of 40°C. In other embodiments said solid agrochemically active compound is solid at 101.3 kPa and at a temperature of 50°C, at a temperature of 60°C, at a temperature of 70°C, or at a temperature of 80°C.

In one embodiment, at least one solid agrochemically active compound has a melting- or degradation point at 101.3 kPa which is above 20°C. In other embodiments, said solid agrochemically active compound has a melting- or degradation point at 101.3 kPa which is above 40°C, above 50°C, above 60°C, above 70°C, or 80°C such as in the range of 80°C to 300°C.

In one embodiment, at least one solid agrochemically active compound is solid at 20°C and 101.3 kPa and has a melting point of above 40°C.

At least one solid agrochemically active compound is insoluble in the agrochemical formulation, when ≤10 g of the respective solid agrochemically active compound is soluble in 1000 g of the agrochemical formulation at 20°C and 101.3 kPa. At least one solid agrochemically active compound may be insoluble in compound (b) and/or the agrochemical formulation according to the invention, when ≤5 g, ≤3 g, ≤1 g, or ≤0.5 g of the respective solid agrochemically active compound is soluble in 1000 g of the agrochemical formulation at 20°C and 101.3 kPa.

The solid-based agrochemical formulation of the invention may be a suspension concentrate (SC) or suspo-emulsions (SE) or oil dispersions (OD) or liquid formulations comprising microencapsulated particles (CS).

The term "formulation auxiliaries" herein means any ingredient, which is suitable for designing agrochemical formulations of various types comprising components (a), (b), and optionally (c) as disclosed herein. Formulation auxiliaries are known to those skilled in the art and may be selected from surface-active substances (such as dispersants, emulsifiers, surfactants, solubilizers, protective colloids, wetters and stickers), solvents, solid carriers, defoamers, preservatives, antifreeze agents, rheology modifiers, colorants, antioxidants, retention enhancers (e.g. Lutensol® ON 60), penetration enhancers, adjuvants, tackifiers or binders (for example for the treatment of seeds) oils, and compatibilizer. Formulation auxiliaries herein also include component (b) as disclosed above, component (c) as disclosed above.

Formulation auxiliaries may have more than one function in the final application of the agrochemical formulation, therefore any formulation auxiliary mentioned in the context of a specific function herein, may also have another function in the final application of the agrochemical formulation. The function of a specific formulation auxiliary in the final application of an agrochemical formulation usually depends on its amount within the agrochemical formulation, i.e. the effective amount of a formulation auxiliary.

The agrochemical formulation of the invention may comprise at least one compound selected from the group of surfactants. "Surfactant" herein means any organic chemical that, when added to a liquid, changes the properties of that liquid at an interface. According to its ionic charge, a surfactant is called non-ionic, anionic, cationic, or amphoteric.

In one embodiment, the agrochemical formulation comprises at least one non-ionic surfactant. Non-ionic surfactant herein means a surfactant that contains neither positively nor negatively charged (i.e. ionic) functional groups. Examples provided below for surfactants of any kind are to be understood to be non-limiting.

Non-ionic surfactants may be compounds of the general formulae (IVa) and (IVb):

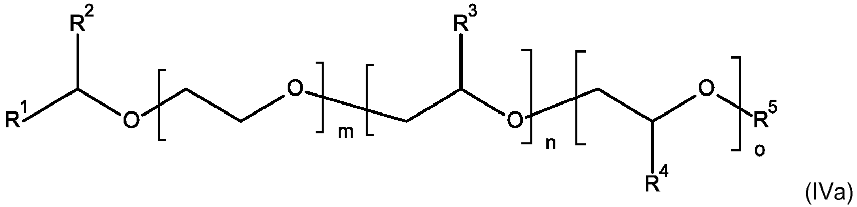

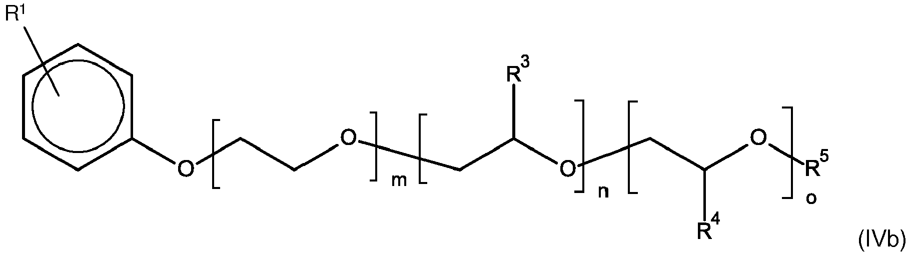

The variables of the general formulae (IVa) and (IVb) are defined as follows:
R¹ is selected from C₇-C₂₃ alkyl and C₇-C₂₃ alkenyl, wherein alkyl and/or alkenyl are linear or branched; examples are n-C₇H₁₅, n-C₉H₁₉, n-C₁₁H₂₃, n-C₁₃H₂₇, n-C₁₅H₃₁, n-C₁₇H₃₅, i-C₉H₁₉, i-C₁₂H₂₅.
R² is selected from H, C₁-C₂₀ alkyl and C₂-C₂₀ alkenyl, wherein alkyl and/or alkenyl are linear or branched.
R³ and R⁴, each independently selected from C₁-C₁₆ alkyl, wherein alkyl is linear or branched; examples are methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl, isodecyl.
R⁵ is selected from H and C₁-C₁₈ alkyl, wherein alkyl is linear or branched.

The integers of the general formulae (IVa) and (IVb) refer to average values and are defined as follows:
m is in the range of zero to 200, preferably 1-80, more preferably 3-20; n and o, each independently in the range of zero to 100; n preferably is in the range of 1 to 10, more preferably 1 to 6; o preferably is in the range of 1 to 50, more preferably 4 to 25. The sum of m, n and o is at least one, preferably the sum of m, n and o is in the range of 5 to 100, more preferably in the range of from 9 to 50.

The non-ionic surfactants of the general formulas (IVa) and (IVb) may be of any structure, is it block or random structure, and is not limited to the displayed sequences of the general formulas (IVa) and (IVb).

Non-ionic surfactants may further be compounds of the general formula (V), which might be called alkyl-polyglycosides (APG):

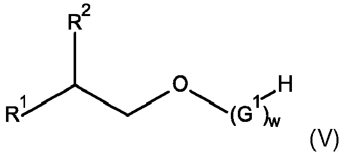

The variables of the general formula (V) are defined as follows:
R¹ is selected from C₁-C₁₇ alkyl and C₂-C₁₇ alkenyl, wherein alkyl and/or alkenyl are linear or branched; examples are n-C₇H₁₅, n-C₉H₁₉, n-C₁₁H₂₃, n-C₁₃H₂₇, n-C₁₅H₃₁, n-C₁₇H₃₅, i-C₉H₁₉, i-C₁₂H₂₅.
R² is selected from H, C₁-C₁₇ alkyl and C₂-C₁₇ alkenyl, wherein alkyl and/or alkenyl are linear or branched.
G¹ is selected from monosaccharide residues with 4 to 6 carbon atoms, such as glucose and xylose.

The integer w of the general formula (V) is in the range of from 1.1 to 4, w being an average number.

Non-ionic surfactants may further be compounds of general formula (VI):

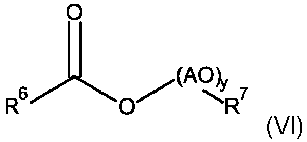

The variables of the general formula (VI) are defined as follows:
AO is selected from ethylene oxide (EO), propylene oxide (PO), butylene oxide (BO), and mixtures thereof.
R⁶ is selected from C₅-C₁₇ alkyl and C₅-C₁₇ alkenyl, wherein alkyl and/or alkenyl are linear or branched.
R⁷ is selected from H, C₁-C₁₈-alkyl, wherein alkyl is linear or branched.

The integer y of the general formula (VI) is a number in the range of 1 to 70, preferably 7 to 15; y is an average number.

Non-ionic surfactants may further be selected from sorbitan esters and/or ethoxylated or propoxylated sorbitan esters. Non-limiting examples are products sold under the trade names SPAN and TWEEN.

Non-ionic surfactants may further be selected from carbonated mono- or di-alkylamines, fatty acid monoethanolamides (FAMA), fatty acid diethanolamides (FADA), ethoxylated fatty acid monoethanolamides (EFAM), propoxylated fatty acid monoethanolamides (PFAM), polyhydroxy alkyl fatty acid amides, or N-acyl N-alkyl derivatives of glucosamine (glucamides, GA, or fatty acid glucamide, FAGA), and combinations thereof.

In one embodiment of the invention, he agrochemical formulation comprises two or more different non-ionic surfactants.

In one embodiment, the agrochemical formulation comprises at least one amphoteric surfactant. Amphoteric surfactants are those, depending on pH, which can be either cationic, zwitterionic or anionic.

Amphoteric surfactants may be compounds comprising amphoteric structures of general formula (VII), which might be called modified amino acids (proteinogenic as well as non-proteinogenic):

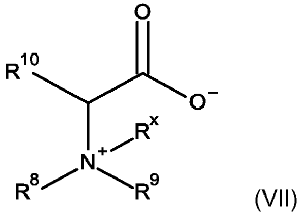

The variables in general formula (VII) are defined as follows:
R⁸ is selected from H, C₁-C₄ alkyl, C₂-C₄ alkenyl, wherein alkyl and/or are linear or branched.
R⁹ is selected from C₁-C₂₂- alkyl, C₂-C₂₂- alkenyl, C₁₀-C₂₂ alkylcarbonyl, and C₁₀-C₂₂ alkenylcarbonyl.
R¹⁰ is selected from H, methyl, -(CH₂)₃NHC(NH)NH₂, -CH₂C(O)NH₂, -CH₂C(O)OH,-(CH₂)₂C(O)NH₂, -(CH₂)₂C(O)OH, (imidazole-4-yl)-methyl, -CH(CH₃)C₂H₅, -CH₂CH(CH₃)₂,-(CH₂)₄NH₂, benzyl, hydroxymethyl, -CH(OH)CH₃, (indole-3-yl)-methyl, (4-hydroxy-phenyl)-methyl, isopropyl, -(CH₂)₂SCH₃, and -CH₂SH.
R^{x} is selected from H and C₁-C₄-alkyl.

Amphoteric surfactants may further be compounds comprising amphoteric structures of general formulae (VIIIa), (VIIIb), or (VIIIc), which might be called betaines and/or sulfobetaines:

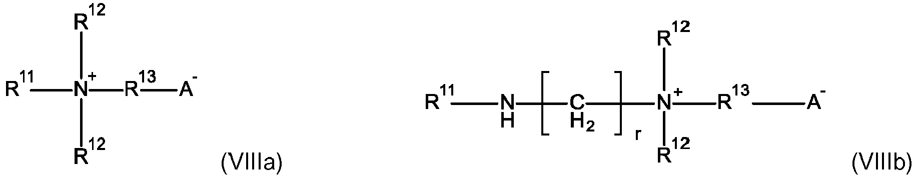

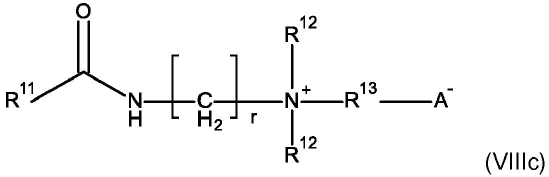

The variables in general formulae (VIIIa), (VIIIb) and (VIIIc) are defined as follows:
R¹¹ is selected from linear or branched C₇-C₂₂ alkyl and linear or branched C₇-C₂₂ alkenyl.
R¹² are each independently selected from linear C₁-C₄ alkyl.
R¹³ is selected from C₁-C₅ alkyl and hydroxy C₁-C₅ alkyl; for example 2-hydroxypropyl.
A⁻ is selected from carboxylate and sulfonate.

The integer r in general formulae (VIIIa), (VIIIb), and (VIIIc) is in the range of 2 to 6.

Amphoteric surfactants may further be compounds comprising amphoteric structures of general formula (IX), which might be called alkyl-amphocarboxylates:

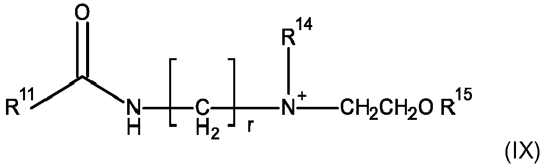

The variables in general formula (IX) are defined as follows:
R¹¹ is selected from C₇-C₂₂ alkyl and C₇-C₂₂ alkenyl, wherein alkyl and/or alkenyl are linear or branched, preferably linear.
R¹⁴ is selected from -CH₂C(O)O-M⁺, -CH₂CH₂C(O)O-M⁺ and -CH₂CH(OH)CH₂SO₃⁻M⁺.
R¹⁵ is selected from H and -CH₂C(O)O⁻

The integer r in general formula (IX) is in the range of 2 to 6.

Non-limiting examples of further suitable alkyl-amphocarboxylates include sodium cocoamphoacetate, sodium lauroamphoacetate, sodium capryloamphoacetate, disodium cocoamphodiacetate, disodium lauroamphodiacetate, disodium caprylamphodiacetate, disodium capryloamphodiacetate, disodium cocoamphodipropionate, disodium lauroamphodipropionate, disodium caprylamphodipropionate, and disodium capryloamphodipropionate.

Amphoteric surfactants may further be compounds comprising amphoteric structures of general formula (X), which might be called amine oxides (AO):

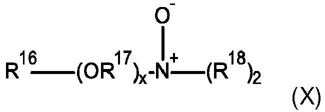

The variables in general formula (X) are defined as follows:
R¹⁶ is selected from C₈-C₁₈ linear or branched alkyl, hydroxy C₈-C₁₈ alkyl, acylamidopropoyl and C₈-C₁₈ alkyl phenyl group; wherein alkyl and/or alkenyl are linear or branched.
R¹⁷ is selected from C₂-C₃ alkylene, hydroxy C₂-C₃ alkylene, and mixtures thereof.
R¹⁸: each residue can be independently selected from C₁-C₃ alkyl and hydroxy C₁-C₃; R¹⁵ groups can be attached to each other, e.g., through an oxygen or nitrogen atom, to form a ring structure.

The integer x in general formula (X) is in the range of 0 to 5, preferably from 0 to 3, most preferably 0.

Non-limiting examples of further suitable amine oxides include C₁₀-C₁₈ alkyl dimethyl amine oxides and C₈-C₁₈ alkoxy ethyl dihydroxyethyl amine oxides. Examples of such materials include dimethyloctyl amine oxide, diethyldecyl amine oxide, bis-(2-hydroxyethyl)dodecyl amine oxide, dimethyldodecylamine oxide, dipropyltetradecyl amine oxide, methylethylhexadecyl amine oxide, dodecylamidopropyl dimethyl amine oxide, cetyl dimethyl amine oxide, stearyl dimethyl amine oxide, tallow dimethyl amine oxide and dimethyl-2-hydroxyoctadecyl amine oxide.

A further example of a suitable amine oxide is cocamidylpropyl dimethylaminoxide, sometimes also called cocamidopropylamine oxide.

In one embodiment, the agrochemical formulation comprises two or more different amphoteric surfactants.

In one embodiment, the agrochemical formulation comprises at least one anionic surfactant. Anionic surfactant means a surfactant with a negatively charged ionic group. Anionic surfactants include, but are not limited to, surface-active compounds that contain a hydrophobic group and at least one water-solubilizing anionic group, usually selected from sulfates, sulfonate, and carboxylates to form a water-soluble compound.

Anionic surfactants may be compounds of general formula (XI), which might be called (fatty) alcohol/alkyl (ethoxy/ether) sulfates [(F)A(E)S] when A- is SO₃⁻, (fatty) alcohol/alkyl (ethoxy/ether) carboxylate [(F)A(E)C] when A- is -RCOO⁻:

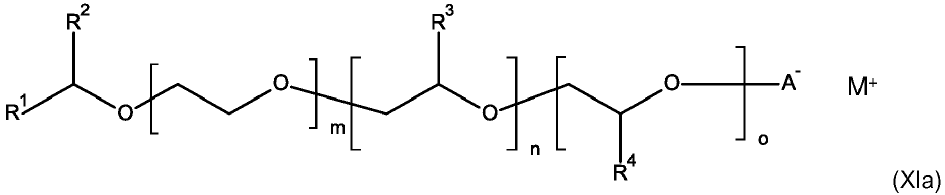

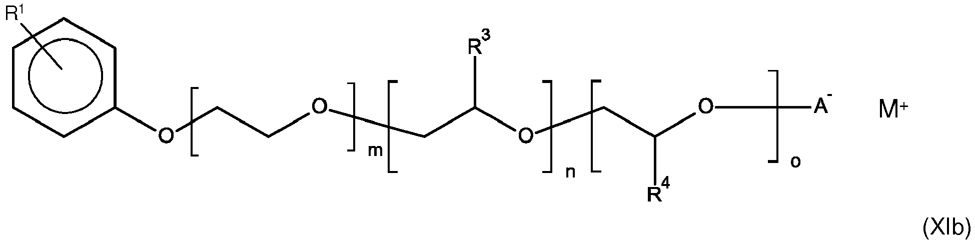

The variables in general formulae (Xia) and (Xlb) are defined as follows:
R¹ is selected from C₁-C₂₃-alkyl (such as 1-, 2-, 3-, 4- C₁-C₂₃-alkyl) and C₂-C₂₃-alkenyl, wherein alkyl and/or alkenyl are linear or branched, and wherein 2-, 3-, or 4-alkyl; examples are n-C₇H₁₅, n-C₉H₁₉, n-C₁₁H₂₃, n-C₁₃H₂₇, n-C₁₅H₃₁, n-C₁₇H₃₅, i-C₉H₁₉, i-C₁₂H₂₅.
R² is selected from H, C₁-C₂₀-alkyl and C₂-C₂₀-alkenyl, wherein alkyl and/or alkenyl are linear or branched.
R³ and R⁴, each independently selected from C₁-C₁₆-alkyl, wherein alkyl is linear or branched; examples are methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl, isodecyl.
A⁻ is selected from -RCOO⁻, -SO₃⁻ and RSO₃⁻, wherein R is selected from linear or branched C₁-C₈-alkyl, and C₁-C₄ hydroxyalkyl, wherein alkyl is.
M⁺ is selected from H and salt forming cations. Salt forming cations may be monovalent or multivalent; hence M⁺ equals 1/v M^{v+}. Examples include but are not limited to sodium, potassium, magnesium, calcium, ammonium, and the ammonium salt of mono-, di, and triethanolamine. The integers of the general formulae (XIa) and (XIb) refer to average values and are defined as follows:
   m is in the range of zero to 200, preferably 1-80, more preferably 3-20; n and o, each independently in the range of zero to 100; n preferably is in the range of 1 to 10, more preferably 1 to 6; o preferably is in the range of 1 to 50, more preferably 4 to 25. The sum of m, n and o is at least one, preferably the sum of m, n and o is in the range of 5 to 100, more preferably in the range of from 9 to 50.

Anionic surfactants of the general formula (XI) may be of any structure, block copolymers or random copolymers.

Further suitable anionic surfactants include salts (M⁺) of C₁₂-C₁₈ sulfo fatty acid alkyl esters (such as C₁₂-C₁₈ sulfo fatty acid methyl esters), C₁₀-C₁₈-alkylarylsulfonic acids (such as n-C₁₀-C₁₈-alkylbenzene sulfonic acids) and C₁₀-C₁₈ alkyl alkoxy carboxylates.

M⁺ in all cases is selected from salt forming cations. Salt forming cations may be monovalent or multivalent; hence M⁺ equals 1/v M^{v+}. Examples include but are not limited to sodium, potassium, magnesium, calcium, ammonium, and the ammonium salt of mono-, di, and triethanolamine.

Non-limiting examples of further suitable anionic surfactants include branched alkylbenzenesulfonates (BABS), phenylalkanesulfonates, alpha-olefinsulfonates (AOS), olefin sulfonates, alkene sulfonates, alkane-2,3-diylbis(sulfates), hydroxyalkanesulfonates and disulfonates, secondary alkanesulfonates (SAS), paraffin sulfonates (PS), sulfonated fatty acid glycerol esters, alkyl- or alkenylsuccinic acid, fatty acid derivatives of amino acids, diesters and monoesters of sulfo-succinic acid.

Anionic surfactants may be compounds of general formula (XII), which might be called N-acyl amino acid surfactants:

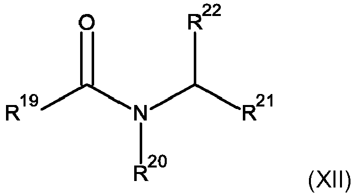

The variables in general formula (XII) are defined as follows:
R¹⁹ is selected from linear or branched C₆-C₂₂-alkyl and linear or branched C₆-C₂₂-alkenyl such as oleyl.
R²⁰ is selected from H and C₁-C₄-alkyl.
R²¹ is selected from H, methyl, -(CH₂)₃NHC(NH)NH₂, -CH₂C(O)NH₂, -CH₂C(O)OH,-(CH₂)₂C(O)NH₂, -(CH₂)₂C(O)OH, (imidazole-4-yl)-methyl, -CH(CH₃)C₂H₅, -CH₂CH(CH₃)₂,-(CH₂)₄NH₂, benzyl, hydroxymethyl, -CH(OH)CH₃, (indole-3-yl)-methyl, (4-hydroxy-phenyl)-methyl, isopropyl, -(CH₂)₂SCH₃, and -CH₂SH.
R²² is selected from -COOX and -CH₂SO₃X, wherein X is selected from Li⁺, Na⁺ and K⁺. Non-limiting examples of suitable N-acyl amino acid surfactants are the mono- and dicarboxylate salts (e.g., sodium, potassium, ammonium and ammonium salt of mono-, di, and triethanolamine) of N-acylated glutamic acid, for example, sodium cocoyl glutamate, sodium lauroyl glutamate, sodium myristoyl glutamate, sodium palmitoyl glutamate, sodium stearoyl glutamate, disodium cocoyl glutamate, disodium stearoyl glutamate, potassium cocoyl glutamate, potassium lauroyl glutamate, and potassium myristoyl glutamate; the carboxylate salts (e.g., sodium, potassium, ammonium and ammonium salt of mono-, di, and triethanolamine) of N-acylated alanine, for example, sodium cocoyl alaninate, and triethanolamine lauroyl alaninate; the carboxylate salts (e.g., sodium, potassium, ammonium and ammonium salt of mono-, di, and triethanolamine) of N-acylated glycine, for example, sodium cocoyl glycinate, and potassium cocoyl glycinate; the carboxylate salts (e.g., sodium, potassium, ammonium and ammonium salt of mono-, di, and triethanolamine) of N-acylated sarcosine, for example, sodium lauroyl sarcosinate, sodium cocoyl sarcosinate, sodium myristoyl sarcosinate, sodium oleoyl sarcosinate, and ammonium lauroyl sarcosinate.

Anionic surfactants may further be selected from the group of soaps. Suitable are salts (M⁺) of saturated and unsaturated C₁₂-C₁₈ fatty acids, such as lauric acid, myristic acid, palmitic acid, stearic acid, behenic acid, oleic acid, (hydrated) erucic acid. M⁺ is selected from salt forming cations. Salt forming cations may be monovalent or multivalent; hence M⁺ equals 1/v M^{v+}. Examples include but are not limited to sodium, potassium, magnesium, calcium, ammonium, and the ammonium salt of mono-, di, and triethanolamine.

Further non-limiting examples of suitable soaps include soap mixtures derived from natural fatty acids such as tallow, coconut oil, palm kernel oil, laurel oil, olive oil, or canola oil. Such soap mixtures comprise soaps of lauric acid and/or myristic acid and/or palmitic acid and/or stearic acid and/or oleic acid and/or linoleic acid in different amounts, depending on the natural fatty acids from which the soaps are derived.

Further non-limiting examples of suitable anionic surfactants include salts (M⁺) of sulfates, sulfonates or carboxylates derived from natural fatty acids such as tallow, coconut oil, palm kernel oil, laurel oil, olive oil, or canola oil. Such anionic surfactants comprise sulfates, sulfonates or carboxylates of lauric acid and/or myristic acid and/or palmitic acid and/or stearic acid and/or oleic acid and/or linoleic acid in different amounts, depending on the natural fatty acids from which the soaps are derived.

In one embodiment, the agrochemical formulation comprises two or more different anionic surfactants.

In one embodiment, the agrochemical formulation comprises at least one cationic surfactant. Cationic surfactant means a surfactant with a positively charged ionic group. Typically, these cationic moieties are nitrogen containing groups such as quaternary ammonium or protonated amino groups. The cationic protonated amines can be primary, secondary, or tertiary amines. Cationic surfactants may be compounds of the general formula (XIII) which might be called quaternary ammonium compounds (quats):

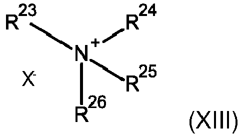

The variables in general formula (XIII) are defined as follows:
R²³ is selected from H, C₁-C₄ alkyl (such as methyl) and C₂-C₄ alkenyl, wherein alkyl and/or alkenyl is linear or branched.
R²⁴ is selected from C₁-C₄ alkyl (such as methyl), C₂-C₄ alkenyl and C₁-C₄ hydroxyalkyl (such as hydroxyethyl), wherein alkyl and/or alkenyl is linear or branched.
R²⁵ is selected from C₁-C₂₂ alkyl (such as methyl, C₁₈ alkyl), C₂-C₄ alkenyl, C₁₂-C₂₂ alkylcarbonyloxymethyl and C₁₂-C₂₂ alkylcarbonyloxyethyl (such as C₁₆-C₁₈ alkylcarbonyloxyethyl), wherein alkyl and/or alkenyl is linear or branched.
R²⁶ is selected from C₁₂-C₁₈ alkyl, C₂-C₄ alkenyl, C₁₂-C₂₂ alkylcarbonyloxymethyl, C₁₂-C₂₂ alkylcarbonyloxyethyl and 3-(C₁₂-C₂₂ alkylcarbonyloxy)-2(C₁₂-C₂₂ alkylcarbonyloxy)-propyl.
X⁻ is selected from halogenid, such as Cl⁻ or Br⁻.

Non-limiting examples of further cationic surfactants include, amines such as primary, secondary and tertiary monoamines with C₁₈ alkyl or alkenyl chains, ethoxylated alkylamines, carbonates of ethylenediamine, imidazoles (such as 1-(2-hydroxyethyl)-2-imidazoline, 2-alkyl-1-(2-hydroxyethyl)-2-imidazoline, and the like), quaternary ammonium salts like alkylquaternary ammonium chloride surfactants such as n-alkyl(C₁₂-C₁₈)dimethylbenzyl ammonium chloride, n-tetradecyldimethylbenzylammonium chloride monohydrate, and a naphthylene-substituted quaternary ammonium chloride such as dimethyl-1-naphthylmethylammonium chloride.

Cationic surfactants may be selected from:
- N,N-dimethyl-N-(hydroxy-C₇-C₂₅-alkyl)ammonium salts;
- mono- and di(C₇-C₂₅-alkyl)dimethylammonium compounds quaternized with alkylating agents;
- ester quats, in particular quaternary esterified mono-, di- and trialkanolamines which are esterified with C₈-C₂₂-carboxylic acids;
- imidazoline quats, in particular 1-alkylimidazolinium salts of formulae XIV or XV

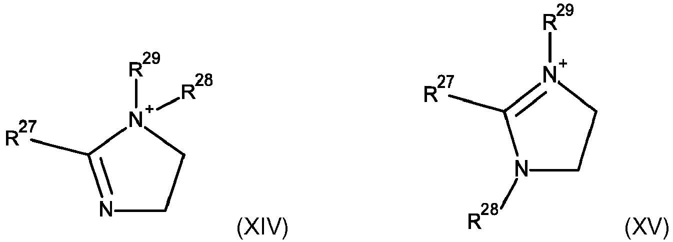

The variables in formulae (XIV) and (XV) are defined as follows:
R²⁷ is selected from C₁-C₂₅-alkyl and C₂-C₂₅-alkenyl;
R²⁸ is selected from C₁-C₄-alkyl and hydroxy-C₁-C₄-alkyl;
R²⁹ is selected from C₁-C₄-alkyl, hydroxy-C₁-C₄-alkyl and a R*-(CO)-R³⁰-(CH₂)ⱼ- radical, wherein R* is selected from C₁-C₂₁-alkyl and C₂-C₂₁-alkenyl; R³⁰ is selected from-O- and -NH-; j is 2 or 3. In one embodiment, the agrochemical formulation comprises two or more different cationic surfactants.

In one embodiment, the agrochemical formulation comprises mixtures of at least one non-ionic and/or at least one amphoteric and/or at least one anionic surfactant and/or at least one cationic surfactant.

The agrochemical formulation of the invention may comprise various amounts of surfactants. It may comprise surfactants in amounts in the range of 0.1% to 40% by weight, in the range of 1% to 30% by weight, or in the range of 2% to 20% by weight relative to the total weight of the composition.

The agrochemical formulation of the invention may comprise at least one compound selected from the group of preservatives. Non-limiting examples of suitable preservatives include (quaternary) ammonium compounds, isothiazolinones, organic acids, and formaldehyde releasing agents. Non-limiting examples of suitable (quaternary) ammonium compounds include benzalkonium chlorides, polyhexamethylene biguanide (PHMB), Didecyldimethylammonium chloride(DDAC), and N-(3-aminopropyl)-N-dodecylpropane-1,3-diamine (Diamine). Non-limiting examples of suitable isothiazolinones include 1,2-benzisothiazolin-3-one (BIT), 2-methyl-2H-isothiazol-3-one (MIT), 5-chloro-2-methyl-2H-isothiazol-3-one (CIT), 2-octyl-2H-isothiazol-3-one (OIT), and 2-butyl-benzo[d]isothiazol-3-one (BBIT). Non-limiting examples of suitable organic acids include benzoic acid, sorbic acid, L-(+)-lactic acid, formic acid, and salicylic acid. Non-limiting examples of suitable formaldehyde releasing agent include N,N'-methylenebismorpholine (MBM), 2,2',2"-(hexahydro-1,3,5-triazine-1,3,5-triyl)triethanol (HHT), (ethylenedioxy)dimethanol, .alpha.,.alpha.',.alpha."-trimethyl-1,3,5-triazine-1,3,5(2H,4H,6H)-triethanol (HPT), 3,3'-methylenebis[5-methyloxazolidine] (MBO), and cis-1-(3-chloroallyl)-3,5,7-triaza-1- azoniaadamantane chloride (CTAC). Further useful preservatives include iodopropynyl butylcarbamate (IPBC), halogen releasing compounds such as dichloro-dimethyl-hydantoine (DCDMH), bromo-chloro-dimethyl-hydantoine (BCDMH), and dibromo-dimethyl-hydantoine (DBDMH); bromo-nitro compounds such as Bronopol (2-bromo-2-nitropropane-1,3-diol), 2,2-dibromo-2-cyanoacetamide (DBNPA); aldehydes such as glutaraldehyde; phenoxyethanol; Biphenyl-2-ol; and zinc or sodium pyrithione.

The agrochemical formulation of the invention may comprise at least one compound selected from the group of antifreeze agents. Non-limiting examples of suitable antifreeze agents include liquid polyols, such as ethylene glycol, propylene glycol, urea and glycerol.

The agrochemical formulation of the invention may comprise at least one compound selected from the group of adjuvants. Non-limiting examples of suitable adjuvants include organically modified polysiloxanes such as BreakThruS 240® (Alzchem AG); alcohol carbonates such as Atplus®245 (Croda), Atplus®MBA 1303 (Croda), Plurafac®LF and Lutensol® ON (both BASF SE); EO/PO block polymers, for example Pluronic® RPE 2035 (BASF SE) and Genapol® B (Clariant); alcohol ethoxylates, for example Lutensol® XP 80 (BASF SE); and sodium dioctylsulfosuccinate, for example Leophen® RA (BASF SE).

The agrochemical formulation of the invention may comprise at least one compound selected from the group of antifoams. Non-limiting examples of suitable antifoams include silicone emulsions (such as, for example Silikon® SRE, Wacker, Germany or Rhodorsil®, Rhodia, France), long-chain alcohols, fatty acids, salts of fatty acids, organofluorine compounds and their mixtures.

The agrochemical formulation of the invention may comprise at least one compound selected from the group of stickers. Non-limiting examples of suitable stickers include polyvinylpyrrolidone, polyvinyl acetate, polyvinyl alcohol and cellulose ethers (Tylose®, Shin-Etsu, Japan).

The agrochemical formulation of the invention may comprise at least one compound selected from the group of colorants. Non-limiting examples of suitable colorants include both pigments, which are sparingly soluble in water, and dyes, which are soluble in water. Examples which may be mentioned are the dyes and pigments known by the names Rhodamin B, C. I. Pigment Red 112 and C. I. Solvent Red 1, Pigment Blue 15:4, Pigment Blue 15:3, Pigment Blue 15:2, Pigment Blue 15:1, Pigment Blue 80, Pigment Yellow 1, Pigment Yellow 13, Pigment Red 48:2, Pigment Red 48:1, Pigment Red 57:1, Pigment Red 53:1, Pigment Orange 43, Pigment Orange 34, Pigment Orange 5, Pigment Green 36, Pigment Green 7, Pigment White 6, Pigment Brown 25, Basic Violet 10, Basic Violet 49, Acid Red 51, Acid Red 52, Acid Red 14, Acid Blue 9, Acid Yellow 23, Basic Red 10, Basic Red 108.

The agrochemical formulation of the invention may comprise at least one compound selected from the group of thickeners. Non-limiting examples of suitable thickeners (i.e. compounds which impart to the composition a modified flow behavior, i.e. high viscosity at rest and low viscosity in motion) include polysaccharides and organic and inorganic layer minerals such as xanthan gum (Kelzan®, CP Kelco), Rhodopol® 23 (Rhodia) or Veegum® (R.T. Vanderbilt) or Attaclay® (BASF SE).

### Process for preparation of a liquid composition or an agrochemical formulation:

The invention provides a process for the preparation of a liquid composition of the invention, wherein at least component (a), component (b), and optionally component (c) are mixed in no specified order in one or more steps. Mixing is carried out by customary mixing processes, such as stirring, shaking or any other energy input.

The invention provides a process for the preparation of an agrochemical formulation of the invention comprising mixing of at least component (a), component (b), optionally component (c) and at least one formulation auxiliary as disclosed above, in no specified order in one or more steps. Mixing may be carried out by customary mixing processes, such as stirring, shaking or any other energy input.

In one embodiment, the process for preparation of an agrochemical formulation comprises mixing of the liquid composition of the invention with at least one formulation auxiliary as disclosed above, in no specified order in one or more steps.

### Use of liquid composition/agrochemical formulation for treatment of plants

The present invention provides the use or method of use of the liquid composition and/or the agrochemical formulation according to the invention for the treatment of plants. In one embodiment, the liquid composition and/or agrochemical formulation according to the invention is used for the treatment of crop plants.

Non-limiting examples of "crop plants", such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sun flowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; sweet leaf (also called Stevia); natural rubber plants or ornamental and forestry plants, such as flowers, shrubs, broad-leaved trees or evergreens, e. g. conifers; and on the plant propagation material, such as seeds, and the crop material of these plants.

The term "crop plant" is to be understood as including plants which have been modified by breeding, mutagenesis or genetic engineering including but not limiting to agricultural biotech products on the market or in development (cf. http: //www. bio. org/speeches/pubs/er/agri products. asp). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties. The invention relates to the use of the liquid composition of the invention to control phytopathogenic fungi and/or plant growth and/or undesired insect or mite attack, wherein the liquid composition and/or agrochemical formulation of the invention is allowed to act on the respective pests, their environment or the plants to be protected from the respective pest, the soil and/or on undesired plants and/or the useful plants and/or their environment.

Control of plant growth includes the inhibition of growth of weed and favor or increase of growth of crop plants.

The invention relates to the use or method of use of liquid compositions and/or agrochemical formulations of the invention to the improve of health of "crop plants" which may be determined by several indicators alone or in combination with each other such as yield (e. g. increased biomass and/or increased content of valuable ingredients), plant vigor (e. g. improved plant growth and/or greener leaves ("greening effect")), quality (e. g. improved content or composition of certain ingredients) and tolerance to abiotic and/or biotic stress.

### Application of composition/formulation:

The liquid composition and/or agrochemical formulation according to the invention may be diluted with water prior to application in order to prepare the so-called tank mix. The resulting composition is usually applied by spraying or fogging.

In one embodiment, the tank-mix is prepared by mixing in no specified order in one or more steps at least component (a), component (b), optionally component (c), at least one formulation auxiliary and water in one or more steps.

Oils of various types, wetters, adjuvants, herbicides, bactericides, fungicides may be added to the tank mix immediately prior to application (tank mix). These agents can be admixed to the compositions according to the invention in a weight ratio from 1:100 to 100:1, preferably 1:10 to 10:1. The concentration of the agrochemically active compound in the tank mix can be varied within substantial ranges. In general, they are between 0.0001% and 10%, preferably between 0.01% and 1%. When used in plant protection, the application rates may range between 0.01 and 2.0 kg of agrochemically active compound per ha, depending on the nature of the desired effect.

### Treatment of plant propagation material:

The invention relates to the use or method of use of the liquid composition and/or agrochemical formulation according to the invention for controlling undesired insect or mite attack on plants and/or for controlling phytopathogenic fungi and/or for controlling undesired plant growth, wherein plant propagation material is treated with the composition and/or agrochemical formulation of the invention.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring. In one embodiment, treatment of plant propagation materials with the composition and/or agrochemical formulation of the invention is used for controlling a multitude of fungi on cereals, such as wheat, rye, barley and oats; rice, corn, cotton and soybeans.

The invention relates to seed which has been treated with the liquid composition and/or agrochemical formulation of the invention. The seed may be dressed with the liquid composition and/or agrochemical formulation of the invention. Dressing means that the seed is treated with the liquid composition and/or agrochemical formulation and the liquid composition and/or agrochemical formulation remains on the seed. This liquid composition and/or agrochemical composition may be applied to the seed in undiluted or, preferably, diluted form. In one embodiment, the liquid composition and/or agrochemical formulation in question can be diluted 2- to 10-fold, so that from 0.01 % to 60% by weight, or from 0.1 % to 40% by weight, of agrochemically active compound are present in the liquid composition and/or agrochemical formulation to be used for dressing the seed. The application can take place before sowing. The treatment of plant propagation material, such as the treatment of seed, is known to the skilled worker and is carried out by dusting, coating, pelleting, dipping or soaking the plant propagation material, the treatment may be effected by pelleting, coating and dusting, so that, for example, premature germination of the seed is prevented. In the treatment of seed, one may use amounts of agrochemically active compound in the range of 1 to 1000 g/100 kg, or in the range of 5 to 100 g/100 kg propagation material or seed.

### Use component (b) as solvent

The present invention relates to the use or method of use of at least one carbonate according to formula (I) as described above for dissolving at least one agrochemically active compound. Component (a) is as described above.

In one embodiment, component (b) is used to dissolve at least 25g of component (a) at 20°C and 101.3 kPa in 1000g of component (b) till the saturation point of component (a) in component (b) is achieved. Component (b) may be used to dissolve at least 30g, at least 45g, at least 50g, at least 100g, at least 150g, or at least 200g of component (a) in 1000g of component (b) at 20°C and 101.3 kPa till the saturation point of component (a) in component (b) is achieved. In one embodiment, a mixture of component (b) and component (c) is used to dissolve at least 25g of component (a) at 20°C and 101.3 kPa in 1000g of the mixture of component (b) and component (c) till the saturation point of component (a) in said mixture is achieved. A mixture of component (b) and component (c) may be used to dissolve at least 30g, at least 45g, at least 50g, at least 100g, at least 150g, or at least 200g of component (a) in 1000g of the mixture of component (b) and component (c) at 20°C and 101.3 kPa till the saturation point of component (a) in said mixture is achieved.

The invention relates to the use or method of use of component (b) to increase the amount of component (a) dissolvable when compared to the amount of component (a) in component (c) only. The invention relates to the use or method of use of component (b) as disclosed above to reduce the minimum amount of component (c) necessary for dissolving a certain amount of component (a) to form a homogenous solution.

The minimum amount of component (c) is reduced, when the minimum amount of component (c) is reduced by at least 50% by weight, when compared to the minimum amount of component (c) necessary to dissolve the same amount of component (a) to form a homogenous solution. In different embodiments, the minimum amount of component (c) is reduced, when the minimum amount of component (c) is reduced by at least 60% by weight, or at least 70%by weight, when compared to the minimum amount of component (c) necessary to dissolve the same amount of component (a) to form a homogenous solution.

In one embodiment, the invention relates to the use or method of use of component (b) to reduce the amount of component (c) for improvement of environmental compatibility of an agrochemical formulation.

In one embodiment, the invention relates to the use or method of use of component (b) to reduce component (c) for improvement of effectiveness of an agrochemical formulation.

### Use of component (b) as adjuvant

The present invention provides to the use or method of use of component (b) as an adjuvant. Adjuvants usually modify the effect of active compounds such as agrochemically active compounds comprised in agrochemical formulations. An adjuvant usually increases the effectiveness of an agrochemical formulation.

Increase of effectiveness of an agrochemical formulation of the invention may mean that the agrochemical formulation is more effective in controlling phytopathogenic fungi and/or plant growth and/or undesired insect or mite attack when compared to agrochemical formulations lacking component (b). Increase of effectiveness of an agrochemical formulation may mean that the agrochemical formulation is more effective in improving the health of crop plants when compared to agrochemical formulations lacking component (b).

Increase in effectiveness of an agrochemical formulation may mean that an agrochemical formulation comprising less amounts of an agrochemically active compound exhibits at least maintained effectiveness when compared to agrochemical formulations lacking component (b). The present invention provides to the use or method of use of component (b) to enhance the efficacy of adjuvants.

In one embodiment, enhancement of efficacy relates to the increase of the efficacy of an adjuvant by component (b).

In one embodiment, enhancement of efficacy relates to the ability of component (b) to at least maintain the effectiveness of an agrochemical formulation at reduced amounts of an adjuvant (<100%) when compared to the effectiveness of an agrochemical formulation lacking component (b) but comprising 100% of the same adjuvant.

The efficacy of an adjuvant may be enhanced by component (b) when an agrochemical formulation comprising an adjuvant composition comprising ≤ 50% of an adjuvant and ≥ 50% component (b) exhibits maintained effectiveness when compared to the effectiveness of an agrochemical formulation lacking component (b) but comprising 100% of the same adjuvant. The efficacy of an adjuvant may be enhanced by component (b) when an agrochemical formulation comprising an adjuvant composition comprising ≤ 40% of an adjuvant and ≥ 60% component (b) exhibits maintained effectiveness when compared to the effectiveness of an agrochemical formulation lacking component (b) but comprising 100% of the same adjuvant. The efficacy of an adjuvant may be enhanced by component (b) when an agrochemical formulation comprising an adjuvant composition comprising ≤ 30% of an adjuvant and ≥ 70% component (b) exhibits maintained effectiveness when compared to the effectiveness of an agrochemical formulation lacking component (b) but comprising 100% of the same adjuvant. The efficacy of an adjuvant may be enhanced by component (b) when an agrochemical formulation comprising an adjuvant composition comprising ≤ 20% of an adjuvant and ≥ 80% component (b) exhibits at least maintained effectiveness when compared to the effectiveness of an agrochemical formulation lacking component (b) but comprising 100% of the same adjuvant. The effectiveness of an agrochemical formulation may be maintained when the effectiveness of agrochemical formulation of the invention in controlling phytopathogenic fungi and/or plant growth and/or undesired insect or mite attack is essentially maintained.

The effectiveness of an agrochemical formulation may be maintained when the effectiveness of agrochemical formulation of the invention in improving the health of crop plants is essentially maintained.

"Essentially maintained" in this context means that the effectiveness of an agrochemical formulation of the invention in terms of control of phytopathogenic fungi and/or plant growth and/or undesired insect or mite attack, or in terms of improvement of the health of crop plants is not reduced by more than 10% when compared to the effectiveness of agrochemical formulations lacking component (b). "Essentially maintained" may mean that the effectiveness of an agrochemical formulation of the invention in terms of control of phytopathogenic fungi and/or plant growth and/or undesired insect or mite attack, or in terms of improvement of the health of crop plants is not reduced by more than 9%, 8%, 7%, 6%, 5%, 4%, 3%, 2%, or 1% when compared to the effectiveness of agrochemical formulations lacking component (b). Component (b) may be added to an agrochemical formulation in the form of *in-can* adjuvant. Component (b) may be added separately when the spray solution is being prepared (*tank mix* adjuvant).

### Further use of component (b)

The present invention provides to the use or method of use of component (b) as preservative. In one embodiment, component (b) is used as preservative in agrochemical formulations.

The present invention provides to the use or method of use of component (b) as anti-freeze agent. In one embodiment, component (b) is used as anti-freeze agent in agrochemical formulations.

The present invention provides to the use or method of use of component (b) as an emulsifier and/or an emulsion stabilizer. In one embodiment, component (b) is used as emulsifier and/or an emulsion stabilizer in agrochemical formulations.

The present invention provides to the use or method of use of component (b) as a crystallization inhibitor. In one embodiment, component (b) is used as a crystallization inhibitor in agrochemical formulations.

The examples which follow illustrate the invention without imposing any limitation.

### Examples

Carbonates used in the examples are those provided in Table 1 above. "Carbonate No." if not indicated differently is according to the numbering provided in Table 1 above.

Pesticides used in examples are those listed in the following Table ExP:

| **pesticide** | **pesticide No** | **Solubility in H₂O (data from literature*)** |
|---|---|---|
| dimethoate | 1 | 25 g/l at 25°C |
| azoxystrobin | 2 | 6.7 mg/l at 20°C |
| pyraclostrobin | 3 | 1.9 mg/l at 20°C |
| epoxiconazole | 4 | 8.42 mg/l at 20°C |
| tebuconazole | 5 | 29 mg/l at 20°C |
| diphenoconazole | 6 | 3.3 mg/l at 20°C |
| mefentrifluconazole | 7 | 0.81 mg/l at 20°C |
| fluxapyroxad | 8 | 3.88 mg/l at 20°C |
| fenpropimorph | 9 | 4.3mg/l at 20°C |

| | | |
|---|---|---|
| * The pesticide manual, 16th edition; BCPC; ISBN 978 1 901396 86 7 | | |

### Example 1 - Boiling point and viscosity of carbonates

Determination of boiling point: measured at a pressure below 101.3 kPa; the boiling point measured at this pressure below 101.3 kPa were used to calculate the boiling point at 101.3 kPa by using the following tool: http://www.calctool.org/CALC/chem/substance/boiling. Determination of dynamic viscosity: By using Anton Paar viscosimeter SVM 3000/G2, viscosity was measured at 23°C. Said Anton Paar viscosimeter is a rotational viskosimeter and works according the Stabinger measurement principle.

The following Table Ex1 provides an overview of boiling points and dynamic viscosity of the carbonates provided in Table 1 above, wherein the "carbonate No." is according to Table 1:

| **carbonate No** | **IUPAC name** | **Boiling point °C at 101.3 kPa** | **Viscosity mPa**.**s at 23°C** |
|---|---|---|---|
| 1 | (2-oxo-1,3-dioxolan-4-yl)methyl propanoate | >180°C | 32 |
| 2 | 4-propyl-1,3-dioxolan-2-one | >180°C | 4.2 |
| 3 | (2-oxo-1,3-dioxolan-4-yl)methyl acetate | >180°C | 59.1 |
| 4 | 4-Hydroxymethyl-2-oxo-1,3-dioxolane | >180°C | 5.2 |

### Example 2 - Pesticides and their solubility in carbonates

Determination of maximum solubility of pesticides in solvents and carbonates of the invention: 15g solvent and/or carbonate of the invention were provided in a 25 ml beaker. The solvent and/or carbonate of the invention was stirred with a magnetic stirrer. Portions of 0.15 to 0.5 g of a solid pesticide were prepared and added to the solvent or carbonate of the invention. The solid pesticide and the solvent or carbonate of the invention were stirred to give a homogenous solution. If the homologous solution was achieved another portion of pesticide was added. The addition of pesticide was continued until the saturation point was achieved, meaning that the solvent or carbonate of the invention was not able to dissolve the whole pesticide added. Usually, crystals of pesticide remained at the saturation point.

The solubility of the pesticide in the solvent or carbonate of the invention is provided in maximum amount of agrochemically active compound (pesticide; numbering according to Table ExP above) in g soluble in 1000 g carbonate (numbering according to Table 1 above).

The following Table Ex2 provides solubility of pesticides in carbonates:

| **pesticide No.** | **carbonate No.** | **g/l** |
|---|---|---|
| 1 | 1 | 45.3 |
| 2 | 1 | 8.8 |
| 3 | 1 | 25.2 |
| 4 | 1 | 4.2 |
| 5 | 1 | 4.4 |
| 6 | 1 | 25 |
| 7 | 1 | 1.9 |
| 1 | 2 | 62.9 |
| 2 | 2 | 14.2 |
| 3 | 2 | 49.3 |
| 5 | 2 | 15.3 |
| 6 | 2 | 40.3 |
| 7 | 2 | 7.3 |
| 9 | 2 | >1kg/kg |

### Example 3 - Phytotoxicity of component (b)

500g/ha of the carbonates listed in table of example 1 are sprayed onto leaves of barley (HORVX) plants of good health, wherein the plants are in their 3-leaves stadium. For spraying the following apparatus is used: membrane pump and spray nozzle.

The plants are visually evaluated phenotypically for damages 2 weeks after exposure to the carbonates.

### Example 4 - Solubility of carbonates in water

The water solubility of a substance is the saturation mass concentration of the substance in water at a given temperature. Determination according to OECD guideline for testing of chemicals 105, flask method.

**Table Ex4:**

| **carbonate No.** | **g carbonate per l water** |
|---|---|
| 1 | 54 |
| 2 | 21 |
| 3 | 72 |

The water solubility of propylene carbonate is comparably high, 175 g/l.

### Example 5 - Liquid compositions

Table Ex5: Formulations of agrochemically active compounds (pesticide; numbering according to Table ExP above) in g and carbonate (numbering according to Table 1 above) and optionally component (c) in g in 100 g total formulation.

| **Form. No** | **pesticide No.** | **g/100g** | **carbonate No.** | **g/100g** | **Comp. (c)** | **g/100g** |
|---|---|---|---|---|---|---|
| 1 | 2 | 8.1 | 1 | 91.9 | - | - |
| 2 | 2 | 11.3 | 1 | 62.1 | 2-phenoxyethyl propanoate | 26.6 |
| 3 | 2 | 12.4 | 1 | 26.3 | 2-phenoxyethyl propanoate | 61.3 |
| 4 | 2 | 10.4 | 1 | 4.5 | 2-phenoxyethyl propanoate | 85.1 |
| 5 | 2 | 13.3 | 2 | 86.7 | - | - |
| 6 | 2 | 13.5 | 2 | 60.5 | 2-phenoxyethyl propanoate | 26.0 |
| 7 | 2 | 12.6 | 2 | 26.2 | 2-phenoxyethyl propanoate | 61.2 |
| 8 | 2 | 10.3 | 2 | 4.5 | 2-phenoxyethyl propanoate | 85.2 |
| 9 | 2 | 8.241 | 2 | 5.2 | 2-phenoxyethyl propanoate | 81.4 |
| | 6 | 5.159 | | | | |
| 10 | 2 | 9.877 | 2 | 5.6 | 2-phenoxyethyl propanoate | 76.67 |
| | 5 | 7.901 | | | | |
| 11 | 3 | 5.683 | 2 | 5.6 | 2-phenoxyethyl propanoate | 70.53 |
| | 4 | 3.558 | | | N,N-dimethyldecanamide | 11.11 |
| | 8 | 3.558 | | | | |
| 12 | 9 | 80 | 2 | 5 | 2-phenoxyethyl propanoate | 15 |
| 13 | 9 | 80 | 2 | 20 | - | - |

### Example 6 - Determination of adjuvant effect of component (b)

The following Table Ex6 provides the plants used and their coding according to EPPO (2017) EPPO Global Database (available online). https://gd.eppo.int

**Table Ex6**

| Plant | EPPO code |
|---|---|
| barley | HORVX |
| oat | AVESA |
| Poa pratensis | POAPR |
| Echinochloa crus-galli | ECHCG |
| Setaria viridis | SETVI |
| Stellaria media | STEME |
| Galium aparine | GALAP |

### a) Protective leaf-segment test on barley

Plants tested: barley (HORVX); cultivation of plants: three plants per pot were cultivated in fine Frustorfer soil for three weeks.

The plants were treated with the following SC formulation: fungicidal formulation - 25% by weight azoxystrobin, 16.7% by weight Tamol® NN 2901, 10% by weight propyleneglycol, 48.3% by weight water. The effect of a carbonate (numbering according to Table 1 above) was tested by adding the respective carbonate to the solid-based formulation prior to treatment of the plants. Dosing used was as indicated in Table Ex6a below.

10 hours after treatment with fungicidal formulation, beginning from the stalk, 7 cm leaf segments have been cut; the most recent and the second most recent leaf of a plant were used. 15 pieces of said 7 cm leaf segments were collected and put onto benzimidazole-agar (0.5% agar, 40 ppm benzimidazole added after treatment by autoclave).

The leaf segments on the agar plates were inoculated with fresh conidia of *Blumeria graminis* f. sp. *hordei* (type A6).

The agar plates (10x10cm) were then incubated at 18°C during night time and 23°C during day time at 60-70% air moisture in an incubator for a certain time.

The determination of the mildew infestation was carried out by determining the surface per leaf within 5 cm leaf length infested with mildew. WAT (weeks after treatment) were chosen according to constant impairment observed.

Table Ex6a: Dosing of agrochemically active compound with and without component (b) in protective leaf-segment test on barley (HORVX) and the infestation of mildew after WAT

| azoxystrobin [g/ha] | carbonate No | amount of carbonate [g/ha] | WAT | % leaf surface infested with mildew - average value of 15 leaves | Effect [%] |
|---|---|---|---|---|---|
| 10 | 1 | 0 | 2 | 38.7 | 100 |
| 10 | 1 | 50 | 2 | 28 | 72.35 |

### b) Curative leaf-segment test on barley

Plants tested: barley (HORVX); cultivation of plants: three plants per pot were cultivated in fine Frustorfer soil for three weeks.

The plants were inoculated with fresh conidia of *Blumeria graminis* f. sp. *hordei* (type A6). 24-48h after inoculation with mildew, the plants were treated with the following liquid formulation: fungicidal formulation OPUS® SC 125 (BASF SE; comprising epoxiconazole). The effect of a carbonate (numbering according to Table 1 above) was tested by adding the respective carbonate to the liquid formulation prior to treatment of the plants. Dosing used was as indicated in Table Ex6b below.

10 hours after treatment with fungicidal formulation, beginning from the stalk, 7 cm leaf segments were cut; the most recent leaf and the second most recent leaf of a plant were used. 15 pieces of said 7 cm leaf segments were collected and put onto benzimidazole-agar (0.5% agar, 40 ppm benzimidazole added after treatment by autoclave. The agar plates (10x10cm) were then incubated at 18°C during night time and at 23°C during day time at 60-70% air moisture in an incubator for a certain time.

The determination of the mildew infestation was carried out by mildew pustules per leaf within 5 cm leaf length. WAT (weeks after treatment) were chosen according to constant impairment observed.

**Table Ex6b: Dosing of agrochemically active compound with and without component (b) in curative leaf-segment test on barley (HORVX) and the infestation of mildew after WAT**

| epoxiconazole [g/ha] | carbonate No | amount of carbonate [g/ha] | WAT | Mildew pustules - average value of 15 leaves | Effect [%] |
|---|---|---|---|---|---|
| 10 | 1 | 0 | 2 | 41.3 | 100 |
| 10 | 1 | 50 | 2 | 34.7 | 84 |

### Example 7 - Efficacy of adjuvants in the presence of component (b)

Plants to be tested: barley (HORVX); cultivation of plants: three plants per pot are cultivated in fine Frustorfer soil for three weeks.

The plants are treated with (dosing to be used as indicated in Table Ex7):
- Control: 25% by weight azoxystrobin, 16.7% by weight Tamol® NN 2901, 10% by weight propyleneglycol, 48.3% by weight water; this formulation is called basic formulation (i.e. solid-based formulation.; SC).
- Probe (1): The basic formulation is supplemented with Plurafac® LF221 (i.e. adjuvant).
- Probe (2): The basic formulation is supplemented with adjuvant (Plurafac® LF221) and carbonate (numbering according to Table 1 above).

10 hours after treatment with fungicidal formulation, beginning from the stalk, 7 cm leaf segments are cut; the most recent and the second most recent leaf of a plant are to be used. 15 pieces of said 7 cm leaf segments are to be collected and put onto benzimidazole-agar (0.5% agar, 40 ppm benzimidazole added after treatment by autoclave).
The leaf segments on the agar plates are to be inoculated with fresh conidia of *Blumeria graminis* f. sp. *hordei* (type A6).

The agar plates (10x10cm) are then incubated at 18°C during night time and 23°C during day time at 60-70% air moisture in an incubator for a certain time.
The determination of the mildew infestation is carried out by determining the surface per leaf within 5 cm leaf length infested with mildew. WAT (weeks after treatment) are chosen according to constant impairment observed.

Table Ex7: Dosing of agrochemically active compound with and without adjuvant and/or carbonate (numbering according to Table 1 above) in protective leaf-segment test on barley (HORVX) and the infestation of mildew after WAT

| | azoxystrobin [g/ha] | (adjuvant + carbonate) [g/ha] | Share adjuvant [%] | Share carbonate [%] | WAT | Mildew infestation [%] |
|---|---|---|---|---|---|---|
| Control | 5 | 0 | 0 | 0 | 2 | |
| Probe 1 | 5 | 50 | 100 | 0 | 2 | |
| Probe 2 | 5 | 50 | 20 | 80 | 2 | |

## Claims

1. A liquid composition comprising at least component (a): at least one agrochemically active compound, and component (b): at least one carbonate of the formula (I) 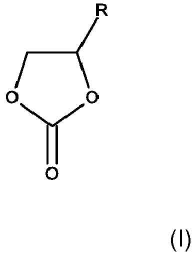 wherein, R is selected from
(iv) linear, cyclic or branched C₃-C₁₀ alkyl,
(v) phenyl,
(vi) -CH₂OR¹, wherein R¹ is selected from linear or branched C₁-C₆ alkyl, linear or branched C₁-C₆ alkyl-carbonyl, phenyl-carbonyl, benzyl-carbonyl, lactate, pyridine-carbonyl, and a residue according to the following formula (II) 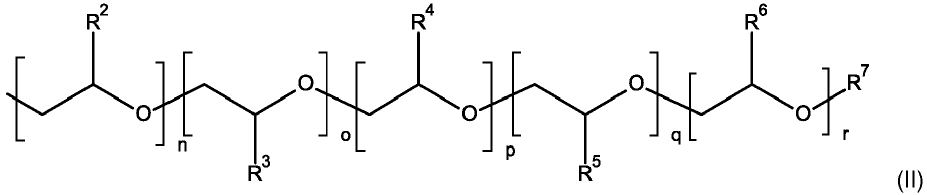 wherein the variables in formula (II) are as follows:
R², R³, R⁴, R⁵, and R⁶ are independently from each other selected from H, methyl, ethyl, propyl and phenyl;
R⁷ is selected from H, linear, cyclic or branched C₁-C₁₀ alkyl, and phenyl;
n, o, p, q, and r are independently from each other an integer in the range of 0-6,
wherein the sum of the integers is in the range of 1 to 6;
and
optionally component (c): at least one compound selected from the group of organic solvents.

2. The liquid composition according to claim 1, wherein component (b) has a boiling point of above 170°C at 101.3 kPa.

3. The liquid composition according any of the preceding claims, wherein component (b) is water-immiscible.

4. The liquid composition according any of the preceding claims, wherein at least one agrochemically active compound comprised in component (a) is selected from herbicides, insecticides and fungicides, and wherein ≤ 50 g of the respective agrochemically active compound is soluble in 1000 g water at 20°C and 101.3 kPa.

5. The liquid composition according any of the preceding claims, wherein at least 10 g of at least one agrochemically active compound comprised in component (a) is soluble in 1000 g of component (b) at 20°C and 101.3 kPa without phase separation until the saturation point of component (a) in component (b) is achieved.

6. The liquid composition according any of the preceding claims, wherein component (c) is selected from organic solvents and polar aprotic solvents which are miscible with component (b) at 20°C and 101.3 kPa.

7. An agrochemical formulation comprising
component (a): at least one agrochemically active compound;
component (b): at least one carbonate of the formula (I) 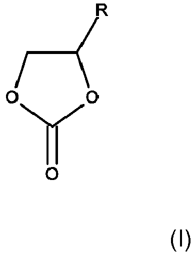 wherein, R is selected from
(i) linear, cyclic or branched C₃-C₁₀ alkyl,
(ii) phenyl,
(iii) -CH₂OR¹, wherein R¹ is selected from linear or branched C₁-C₆ alkyl, linear or branched C₁-C₆ alkyl-carbonyl, phenyl-carbonyl, benzyl-carbonyl, lactate, pyridine-carbonyl, and a residue according to the following formula (II) 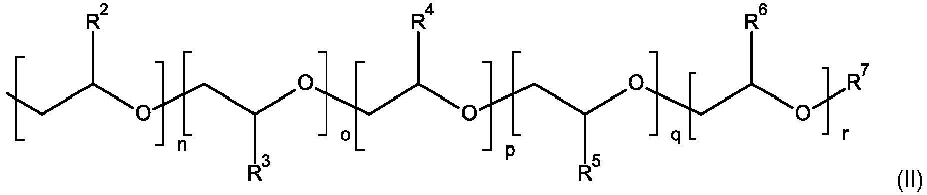 wherein the variables in formula (II) are as follows:
R², R³, R⁴, R⁵, and R⁶ are independently from each other selected from H, methyl, ethyl, propyl and phenyl;
R⁷ is selected from H, linear, cyclic or branched C₁-C₁₀ alkyl, and phenyl;
n, o, p, q, and r are independently from each other an integer in the range of 0-6, wherein the sum of the integers is in the range of 1 to 6;
optionally component (c) which selected from at least one organic solvent and at least one polar aprotic solvents, wherein component (c) is miscible with component (b) at 20°C and 101.3 kPa,
optionally component (c): at least one compound selected from the group of organic solvents, and
one or more formulation auxiliaries.

8. The agrochemical formulation according to claim 7, wherein the agrochemical formulation is liquid, and wherein component (a) is fully dissolved in component (b).

9. Method for preparation of a composition according to claims 1 to 6 or of an agrochemical formulation according to claims 7 and 8, comprising the mixing in no specified order in one or more steps at least component (a) and component (b) and optionally component (c) and optionally one or more formulation auxiliaries.

10. Use of at least one carbonate of the formula (I) 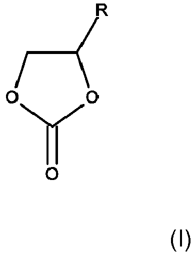 to increase the solubility of a water-insoluble pesticide, wherein R is selected from
(i) linear, cyclic or branched C₃-C₁₀ alkyl,
(ii) phenyl,
(iii) -CH₂OR¹, wherein R¹ is selected from linear or branched C₁-C₆ alkyl, linear or branched C₁-C₆ alkyl-carbonyl, phenyl-carbonyl, benzyl-carbonyl, lactate, pyridine-carbonyl, and a residue according to the following formula (II) 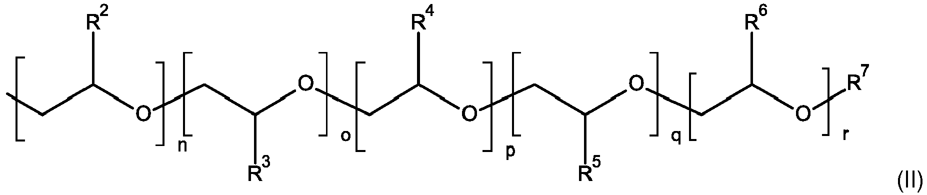 wherein the variables in formula (II) are as follows:
R², R³, R⁴, R⁵, and R⁶ are independently from each other selected from H, methyl, ethyl, propyl and phenyl;
R⁷ is selected from H, linear, cyclic or branched C₁-C₁₀ alkyl, and phenyl;
n, o, p, q, and r are independently from each other an integer in the range of 0-6, wherein the sum of the integers is in the range of 1 to 6;

11. Use of at least one carbonate of the formula (I) 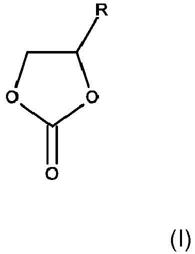 to reduce amount of component (c) in a composition according to claims 1 to 6 or in an agrochemical formulation according to claims 7 and 8, wherein R is selected from
(i) linear, cyclic or branched C₃-C₁₀ alkyl,
(ii) phenyl,
(iii) -CH₂OR¹, wherein R¹ is selected from linear or branched C₁-C₆ alkyl, linear or branched C₁-C₆ alkyl-carbonyl, phenyl-carbonyl, benzyl-carbonyl, lactate, pyridine-carbonyl, and a residue according to the following formula (II) 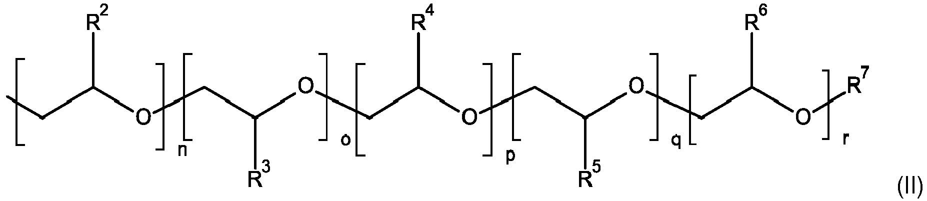 wherein the variables in formula (II) are as follows:
R², R³, R⁴, R⁵, and R⁶ are independently from each other selected from H, methyl, ethyl, propyl and phenyl;
R⁷ is selected from H, linear, cyclic or branched C₁-C₁₀ alkyl, and phenyl;
n, o, p, q, and r are independently from each other an integer in the range of 0-6,
wherein the sum of the integers is in the range of 1 to 6;

12. Use of at least one carbonate of the formula (I) 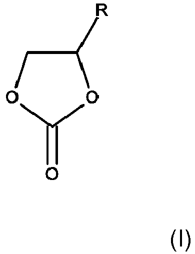 as adjuvant, wherein R is selected from
(i) linear, cyclic or branched C₃-C₁₀ alkyl,
(ii) phenyl,
(iii) -CH₂OR¹, wherein R¹ is selected from linear or branched C₁-C₆ alkyl, linear or branched C₁-C₆ alkyl-carbonyl, phenyl-carbonyl, benzyl-carbonyl, lactate, pyridine-carbonyl, and a residue according to the following formula (II) 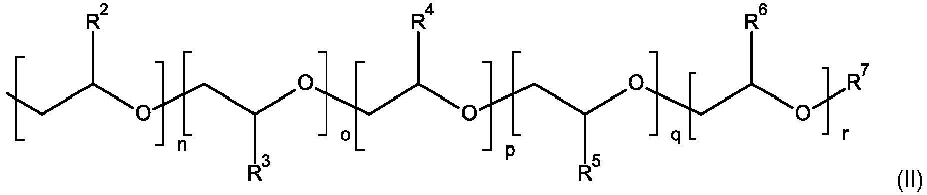 wherein the variables in formula (II) are as follows:
R2, R³, R⁴, R⁵, and R⁶ are independently from each other selected from H, methyl, ethyl, propyl and phenyl;
R⁷ is selected from H, linear, cyclic or branched C₁-C₁₀ alkyl, and phenyl;
n, o, p, q, and r are independently from each other an integer in the range of 0-6,
wherein the sum of the integers is in the range of 1 to 6;

13. Use of at least one carbonate of the formula (I) 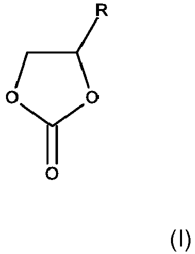 as anti-freeze agent in a composition according to claims 1 to 6 or in an agrochemical formulation according to claims 7 and 8, wherein R is selected from
(i) linear, cyclic or branched C₃-C₁₀ alkyl,
(ii) phenyl,
(iii) -CH₂OR¹, wherein R¹ is selected from linear or branched C₁-C₆ alkyl, linear or branched C₁-C₆ alkyl-carbonyl, phenyl-carbonyl, benzyl-carbonyl, lactate, pyridine-carbonyl, and a residue according to the following formula (II) 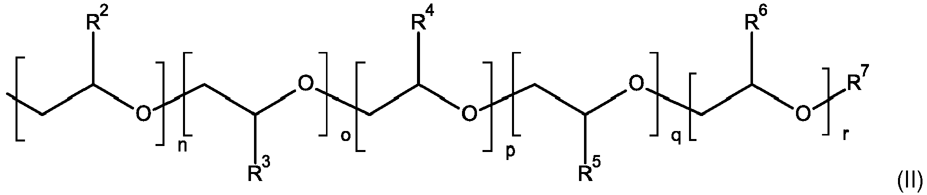 wherein the variables in formula (II) are as follows:
R², R³, R⁴, R⁵, and R⁶ are independently from each other selected from H, methyl, ethyl, propyl and phenyl;
R⁷ is selected from H, linear, cyclic or branched C₁-C₁₀ alkyl, and phenyl;
n, o, p, q, and r are independently from each other an integer in the range of 0-6,
wherein the sum of the integers is in the range of 1 to 6;

14. Method of controlling pathogen and/or insect and/or mite attack by treating crop plants with the agrochemical formulation according to claims 7 and 8.

15. Method of controlling plant growth by treating plants with the agrochemical formulation according to claims 7 and 8, wherein component (a) comprises at least one water-insoluble herbicide.
